(19) Europäisches Patentamt
European Patent Office
Office européen des brevets

(11) Publication number : **0 291 179 B1**

(12) **EUROPEAN PATENT SPECIFICATION**

(45) Date of publication of patent specification : **15.01.92 Bulletin 92/03**

(51) Int. Cl.$^5$ : **C08J 9/14,** B29C 47/00

(21) Application number : **88303448.0**

(22) Date of filing : **15.04.88**

(54) **Preparation of alkenyl aromatic polymer foam and product.**

Divisional application 91106475.6 filed on 15/04/88.

(30) Priority : **15.04.87 US 38688**

(43) Date of publication of application : **17.11.88 Bulletin 88/46**

(45) Publication of the grant of the patent : **15.01.92 Bulletin 92/03**

(84) Designated Contracting States : **BE CH DE ES FR GB GR IT LI NL SE**

(56) References cited :
**EP-A- 0 079 012**
**US-A- 3 300 554**
**US-A- 3 817 669**

(73) Proprietor : **THE DOW CHEMICAL COMPANY**
**2030 Dow Center Abbott Road P.O. Box 1967**
**Midland Michigan 48640-1967 (US)**

(72) Inventor : **Suh, Kyung W.**
**1533 Welsh Hills Road**
**Granville Ohio 43023 (US)**

(74) Representative : **Burford, Anthony Frederick et al**
**W.H. Beck, Greener & Co. 7 Stone Buildings**
**Lincoln's Inn**
**London WC2A 3SZ (GB)**

**EP 0 291 179 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates generally to the preparation of styrene polymer foam bodies and the product obtained. More particularly it relates to methods for controlling skin quality on a production scale of various novel closed cell foams that contain novel gas compositions in the cells.

One of the major applications for styrene polymer foams is in the field of thermal insulation. A styrene polymer foam for thermal insulation desirably has relatively small cells and excellent dimensional stability. It is also highly desirable that the insulating value of the foam be maintained for as long as possible. The variety of styrene polymer foams contemplated within the scope of this invention are the so-called extruded foams. Such extruded foams have a fairly uniform cell size when compared to the so-called molded bead foams. Extruded foams are also employed in the so-called decorative field wherein a foam plank may be cut into a decorative foam and be used as is or used as a base for further decorative material.

Presently known techniques of preparing expanded polystyrene include the extrusion of a thermoplastic resinous gel in admixture with a volatile raising or blowing agent into a region of lower pressure where the volatile raising agent vaporizes and forms a plurality of gas cells within the extruded gel. The extruded foamed gel is subsequently cooled to form a self-supporting or cellular foamed body. A wide variety of blowing agents (also known as foaming or raising agents) are known. These primarily fall into the class of aliphatic hydrocarbons such as butane, hexane, heptane and, pentanes, as well as gases which are soluble in a polymer under pressure such as carbon dioxide. Beneficially, certain fluorinated hydrocarbons are used such as trichlorofluoromethane and, trifluoromethane, as well as such chlorohydrocarbons as methyl chloride. Many of these blowing agents are found to be satisfactory with various alkenyl aromatic polymeric materials. However, uncontrolled variablility in processing conditions results in certain defects, particularly poor skin quality, blow holes in the cellular foamed body, gassing at the die, and poor dimensional stability. These defects result in substandard product being intermittently produced and increase production costs.

In the past it was generally believed that inadequate mixing of the molten polymer and the blowing agent was the cause of blow holes. On a typical production process an operator is assigned to monitoring the foam surface, and, upon onset of inadequate mixing, would increase the mixer speed. If surface was still inadequate after increase of mixer speed then other adjustments would be made, including reduction of throughput of blowing agent and polymer and die gap and foam haul-off rate. However, these changes reduce the output of the given equipment. Also, in the past, there has never been an early warning signal that mixing conditions were beginning to become inadequate. Control of the uniformity of the product properties has been largely an art rather than a science, because the change of the level of one variable in the process typically changes more than one of the product properties. For example, a temporary reduction in the flow rate of blowing agent can help to compensate for excessive build-up of blowing agent within the whole extrusion system, but this correction will also result in the foamed product having a higher density. In practice, it has often been found necessary to make some change to the extrusion conditions of styrene polymer foams as often as every two hours because of random variability causing blow holes.

For a considerable period of time, styrene polymer foams have been extruded employing methyl chloride alone as the blowing agent or a mixture of methyl chloride with chlorofluorocarbons.

When employing such a system in extrusion, generally it must be aged for a period of time to permit the methyl chloride to leave the cells and air to enter by an appropriate diffusion process through the cell walls. Also, in foams employing methyl chloride as the total blowing agent or as a partial blowing agent, the period of aging for thicker extruded boards and planks can present an inconvenient warehousing problem. Methyl chloride's undesirable physical characteristics require caution and good ventilation when such foams are stored or cut to shape.

From a processing standpoint, certain halogen containing compounds such as dichlorodifluoromethane, have also been found to be useful in preparing extruded styrene polymer foams. At the present time it is believed that such compounds, when released into the atmosphere, may reduce the effectiveness of the ozone layer as a solar shield. Therefore, it would be desirable generally to partially or wholly eliminate such compounds from applications where ultimately they are released to the atmosphere.

Extruded foams and their manufacture are discussed at great length in U.S. Patent Nos. 2,409,910 ; 2,515,250 ; 2,669,751 ; 2,848,428 ; 2,928,130 ; 3,121,130 ; 3,121,911 ; 3,770,688 ; 3,815,674 ; 3,960,792 ; 3,966,381 ; 4,085,073 ; 4,146,563 ; 4,229,396 ; 4,312,910 ; 4,421,866 ; 4,438,224 ; 4,454,086 and 4,486,550.

Particularly desirable stable styrene polymer foam is obtained employing the method set forth in U.S. Patent No. 3,960,792 to M. Nakamura.

Styrene polymer foam has been prepared using as the blowing agent a mixture of ethyl chloride, methyl chloride and dichlorodifluoromethane or a mixture of ethyl chloride and dichlorodifluoromethane. Such foam preparation is set forth in U.S. Patent Nos. 4,393,016 and 4,451,417, respectively. An alternative blowing agent

system utilizing carbon dioxide and an alkane is set forth in U.S. Patent Nos. 4,344,710 and 4,424,287.

Alkenyl aromatic polymer foam has also been prepared as set forth in U.S. Patent No. 4,636,527, using as a blowing agent a mixture of carbon dioxide, ethyl chloride and optionally a fluorocarbon member selected from dichlorodifluoromethane, 1-chloro-1,1-difluoroethane and mixtures of these fluorocarbons.

It would be desirable if there were available a process for the preparation of alkenyl aromatic polymer foam which did not cause blow holes, poor skin quality and gassing at the die.

It would also be desirable if in the process of the present invention there was produced a novel alkenyl aromatic polymer foam prepared from more environmentally acceptable blowing agents.

These benefits and other advantages in accordance with the present invention are readily achieved in a process for producing an alkenyl aromatic synthetic resin extruded foam body having closed cells including the steps of ; (a) heat plastifying the alkenyl aromatic synthetic resin ; (b) introducing the plastified resin and a blowing agent into a mixing device having an inlet maintained at a pressure, $P_M$, which is greater than an equilibrium vapor pressure of the blowing agent in the alkenyl aromatic synthetic resin and blowing agent mixture ; (c) passing the mixture through a cooling device ; (d) passing the cooled mixture through a die having a die inlet pressure, $P_D$, which is greater than the die outlet pressure ; all wherein the quality of the foam's surface is controlled by deliberately maintaining the pressure drop from the mixer's inlet to the die's inlet, $\Delta P$, at a pressure drop greater than or equal to an empirically predetermined minimum and critical pressure drop, $\Delta P_C$, for the given mixture of resin and blowing agent.

Also contemplated within the scope of the present invention is an alkenyl aromatic synthetic resin extruded foam prepared from known blowing agents in accordance with the method of the present invention.

Further contemplated as within the scope of the present invention is an alkenyl aromatic synthetic resin extruded foam prepared from more environmentally acceptable blowing agents in accordance with the method of the present invention, which foams have good to excellent surface quality as measured by a test given hereinafter.

Still further contemplated within the scope of the present invention are polystyrene extruded foams prepared in accordance with the present invention.

Yet further contemplated within the scope of the present invention are styrene/acrylic acid copolymer extruded foams prepared in accordance with the present invention.

Still yet further contemplated within the scope of the present invention are ionomeric styrene/acrylic acid copolymer extruded foams prepared in accordance with the present invention.

For decades prior to this invention was made, it had been believed that as long as a die pressure is maintained above a vapor pressure of blowing agent systems at a given foaming temperature, it is possible to produce good quality closed cell low density foams with a good skin quality. Commercial foams prepared from current methods sometimes contain different amounts of blow holes and skin cracks or textures. Furthermore, it is difficult to produce a low density extruded foam with blowing agent systems containing environmentally acceptable blowing agents such as methane, ethane, carbon dioxide, nitrogen, water, and certain fluorocarbons and chlorofluorocarbons containing hydrogen.

In marked contrast to the prior art, foams prepared in accordance with the present invention can "consistently" have a low density extruded foam with improved skin quality and physical properties. The present invention also reduces the scrap rate resulting in a better utilization of raw materials, cost savings, and less emission of volatile organic compounds to the atmosphere.

Figures 1-19 are self-explanatory schematic drawings of various processes according to the invention involving measurement of the pressure drop from the mixer's inlet to the die's inlet.

Also, in contrast to the prior art, the present invention provides an "early warning" signal of deterioration in extrusion conditions before the deterioration is so great that it actually causes blow holes in the surface of the final foam product in particular $\Delta P$ can be easily measured instrumentally on a continuous basis and an alarm sounded if the value of $\Delta P$ ever falls below a given value.

The following steps have been among those found to be effective in correcting for a drift downwards in the value of $\Delta P$. Firstly, the temperature of the mixing device can be reduced by a few degrees centigrade. Secondly, a throttle valve located between the mixer and the die can be partially closed. Thirdly, the blowing agent flow rate can be reduced, thereby increasing the viscosity of the partially mixed polymer and blowing agent. Fourthly, the flow rate of the polymer can be increased (as by increasing the RPM of a gear pump located upstream of the mixer), thereby increasing the viscosity of the partially mixed polymer and blowing agent.

"Alkenyl aromatic synthetic resin" means a solid resin (or polymer) having at least 60% by weight of one or more polymerizable alkenyl aromatic compounds of the general formula

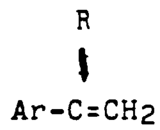

wherein Ar represents an aromatic hydrocarbon radical, or an aromatic halohydrocarbon radical of the benzene series, and R is hydrogen or the methyl radical.

Examples of such alkenyl aromatic resins are the solid homopolymer of styrene, α-methylstyrene, o-methylstyrene, m-methylstyrene, p-methylstyrene, ar-ethylstyrene, ar-vinylxylene, ar-chlorostyrene or ar-bromostyrene ; the solid copolymers of one or more of such alkenyl aromatic compounds with minor amounts of other readily polymerizable olefinic compounds such as methylmethacrylate, acrylonitrile, maleic anhydride, citraconic anhydride, itaconic anhydride, acrylic acid, methacrylic acid, rubber reinforced styrene polymers, etc.

Alkenyl aromatic synthetic resins also include solid homopolymers and solid copolymers blended with other solid homopolymers and solid copolymers, and minor amounts of other polymerized thermoplastic compounds such as polyethylene, polycarbonate, polymethylmethacrylate, polyphenylene oxide, etc.

Particularly useful are the solid homopolymer of styrene, polystyrene, the solid copolymer of styrene and acrylic acid (SAA), and SAA ionomers wherein the ionomers are sodium, calcium, lithium, potassium and magnesium.

The useful neutralizing agents for SAA to be added to the heat plastified SAA in the extruder to produce SAA ionomer are exemplified by, but not limited to, sodium hydroxide, lithium hydroxide, potassium hydroxide, magnesium oxide, calcium hydroxide and calcium stearate. The neutralizing agent is added in an amount of about 0.1 to about 1 part per hundred by weight per hundred parts of resin by weight. Preferably the amount is about 0.1 to about 0.6 parts per hundred.

Blowing agents useful in the practice of the process of the present invention are generally satisfactory if they are of commercial purity.

Some blowing agents or blowing agent mixtures comprise at lease one fluorocarbon which has a permeability through the alkenyl aromatic resinous polymer of not greater than about 0.017 times the permeability of nitrogen through the body and a thermal conductivity of not greater than about 0.09 British thermal units-inch per hour per square foot per degree Fahrenheit (0.013 W/(m.K) with further limitation that a low permeability blowing agent be a compound of the formula :

$$R_1\text{-}CF_2\text{-}R_2$$

wherein $R_1$ is individually selected from chloro, fluoro, methyl, ethyl, chloromethyl, dichloromethyl, difluoromethyl, chlorofluoromethyl, fluoromethyl, and trifluoromethyl radicals and $R_2$ is individually selected from radicals consisting of chloro, fluoro, methyl, tifluoromethyl, and hydrogen with further limitations that the compound contain no more than 3 carbon atoms and if the compound contains as halogen only 2 fluorine atoms, the compound must have 3 carbons or mixtures of compounds meeting the foregoing limitations.

Low permeability blowing agents which meet the foregoing limitations are : 1,1,1-trifluoropropane, 2,2-difluoropropane, 1,1,2,2-tetrafluoroethane, 1,1,1,2-tetrafluoroethane, 1,1,1,2-tetrafluoro-2-chloroethane, 1,1,1-trifluoro-2-chloroethane, 1,1-dichloro-2,2,2-trifluoro-ethane, pentafluoroethane, 1,1,2-trifluoroethane, 1,1,1-tifluoroethane, octafluoropopane, and 1,1-difluoro-1-chloroethane, and dichlorodifluoromethane, and mixtures thereof. All of the foregoing compounds have the required permeability value and thermal conductivity.

Particularly useful are 1,1,1,2-tetrafluoroethane (CFC-134A), 1,1,1,2-tetrafluoro-2-chloroethane (CFC-124), 1,1,1-trifluoroethane (CFC-143A), 1,1-difluoro-1-chloroethane (CFC-142B) and dichlorodifluoromethane (CFC-12).

However, due to environmental considerations, it is desirable to reduce or eliminate the use of CFC-12.

Additional blowing agents which are more environmentally acceptable with respect to the problem of ozone depletion in the preparation of foam in accordance with the present invention and eliminate or reduce the concentration of fully halogenated chlorofluorocarbons include : ethyl chloride (EtCl), carbon dioxide ($CO_2$), chlorodifluoromethane, 1,1-difluoroethane, nitrogen ($N_2$), water ($H_2O$), the aliphatic hydrocarbons including, methane, ethane, ethylene, propane, propylene, butane, butylene, isobutane, pentane, neopentane, isopentane, hexane, heptane and mixtures of any of these additional blowing agents.

Particularly useful are methane, ethane, propane, ethyl chloride, carbon dioxide, nitrogen, water and chlorodifluoromethane (CFC-22).

The term "blowing agent" as used in this specification shall refer to both a single blowing agent and mixtures of blowing agents.

The blowing agent usually is present in the process of the present invention at a level of about 3 to about 30 parts by weight per 100 parts by weight of alkenyl aromatic synthetic resin.

Specific blowing agents useful in the process of the present invention for the preparation of alkenyl aromatic synthetic resin foams are (all percents are weight percents based on the total weight of the blowing agent) :

(1) CFC-12, CFC-124, CFC-134A, CFC-142B, CFC-143A and mixtures thereof ;
(2) Any of the CFCs of (1) in a mixture with up to 6 percent $CO_2$ ;
(3) 55 to 97 percent EtCl and 3 to 45 percent $CO_2$ ;
(4) The blowing agent of (3) in a mixture with up to 90 percent of a CFC selected from CFC-12, CFC-142B and mixtures thereof ;
(5) 19 to 97 percent EtCl and 3 to 81 percent $CO_2$ ;
(6) The blowing agent of (5) in a mixture with up to 90 percent of a CFC selected from CFC-12, CFC-142B or mixtures thereof ;
(7) The blowing agent of (3) in a mixture with up to 90 percent of a mixture of CFC-12 and one or more CFCs selected from CFC-134A, CFC-124 and CFC-143A ;
(8) The blowing agent of (5) in a mixture with up to 90 percent of a mixture of CFC-12 and one or more CFCs selected from CFC-134A, CFC-124 and CFC-143A ;
(9) 20 to 97 percent EtCl and 3 to 80 percent of CFC-12, CFC-142B, CFC-134A, CFC-124, CFC-143A and mixtures thereof ;
(10) The blowing agent of (9) in a mixture with up to 3 percent $CO_2$ ;
(11) The blowing agent of (1) in a mixture with up to 40 percent of CFC-22 ;
(12) The blowing agent of (11) in a mixture with up to 5.5 percent $CO_2$ ;
(13) The blowing agent of (1) in a mixture with up to 50 percent ethane ;
(14) The blowing agent of (13) in a mixture with up to 6 percent $CO_2$ ;
(15) The blowing agent of (1) in a mixture with up to 50 percent propane ;
(16) The blowing agent of (15) in a mixture with up to 6 percent $CO_2$ ;
(17) The blowing agent of (5) in a mixture with up to 90 percent of the blowing agent of (1), and up to 50 percent ethane ;
(18) The blowing agent of (5) in a mixture with up to 90 percent of the blowing agent of (1), and up to 50 percent propane ;
(19) The blowing agent of (5) in a mixture with up to 90 percent of the blowing agent of (1), and up to 50 percent of CFC-22 ;
(20) CFC-22 ;
(21) The blowing agent of (20) in a mixture with up to 5 percent $CO_2$ ;
(22) The blowing agent of (20) in a mixture with up to 50 percent ethane ;
(23) The blowing agent of (21) in a mixture with up to 50 percent ethane ;
(24) The blowing agent of (20) in a mixture with up to 50 percent propane ;
(25) The blowing agent of (21) in a mixture with up to 50 percent propane ;
(26) EtCl and up to 40 percent $CO_2$ ;
(27) EtCl and up to 70 percent ethane ;
(28) The blowing agent of (26) in a mixture with up to 70 percent ethane ;
(29) EtCl and up to 70 percent propane ;
(30) The blowing agent of (26) in a mixture with up to 70 percent propane ;
(31) EtCl and up to 70 percent CFC-22 ;
(32) The blowing agent of (26) in a mixture with up to 70 percent CFC-22 ;
(33) The blowing agent of (31) in a mixture with up to 70 percent ethane ;
(34) The blowing agent of (31) in a mixture with up to 70 percent propane ;
(35) $H_2O$ ;
(36) 0.4 percent to 99.9 percent $H_2O$ and 0.1 percent to 99,6 percent $CO_2$ ;
(37) The blowing agent of (36) in a mixture with up to 99.5 percent of the blowing agent of (1) ;
(38) $H_2O$ and up to 60 percent CFC-22 ;
(39) The blowing agent of (36) in a mixture with up to 60 percent CFC-22 ;
(40) The blowing agent of (38) in a mixture with up to 60 percent of ethane, propane, EtCl or mixtures thereof;
(41) $H_2O$ and up to 60 percent ethane ;
(42) The blowing agent of (36) in a mixture with up to 60 percent ethane ;
(43) $H_2O$ and up to 60 percent propane ;
(44) The blowing agent of (36) in a mixture with up to 60 percent propane ;
(45) $H_2O$ and up to 60 percent EtCl ; and

(46) The blowing agent of (36) in a mixture with up to 60 percent EtCl.

These blowing agents listed are not intended to be an exhaustive list, rather merely representative. For example, it is possible to have blowing agents containing methane, nitrogen, and/or other known blowing agents, such as methyl chloride.

In the preparation of foams in accordance with the process of the present invention, it is often desirable to add a nucleating agent to control the cell size. Talc, calcium silicate, indigo, and the like are suitable agents which control cell size. It is also desirable to add a flame retarding agent such as hexabromocyclododecane or monochloropentabromocyclohexane, an extrusion aid such as barium stearate or calcium stearate, and an acid scavenger such as magnesium oxide or tetrasodium pyrophosphate.

Alkenyl aromatic resinous polymer foam bodies prepared in accordance with the process of the present invention usually have an average cell size of from about 0.05 millimeter (mm) to about 3.5 mm and preferably from about 0.08 mm to about 3.0 mm, and a density of from about 1.0 pound per cubic foot (pfc) (16 kg/m$^3$) to about 5.0 pcf (80 kg/m$^2$), preferably from about 1.0 pcf (16 kg/m$^3$) to about 4.0 pcf (64 kg/m$^2$).

Alkenyl aromatic resinous polymer foam bodies prepared in accordance with the process of the present invention usually have a minimal cross-sectional thickness of one half (1/2) inch (1.3 cm) and a minimal cross-sectional are of eight (8) square inches (52 cm$^2$).

Generally, the preparation of alkenyl aromatic resinous polymer foams in accordance with the present invention is most conveniently done in a manner generally shown and described in U.S. Patent No. 2,669,751, wherein the volatile fluid and/or gaseous blowing agent is injected into a heat-plastified polymer stream within an extruder. From the extruder the heat-plastified gel is passed into a mixer, the mixer being a rotary mixer wherein a studded rotor is enclosed within a housing which has a studded internal surface which intermeshes with the studs on the rotor. The heat-plastified gel from the extruder is fed into the inlet end of the mixer and discharged from the outlet end, the flow being in a generally axial direction. A second possible injection point for the volatile fluid and/or gaseous blowing agent into the heat-plastified polymer stream is into the mixer, rather than the extruder. From the mixer, the gel passes through coolers such as are described in U.S. Patent No. 2,669,751 and from the coolers to a die which extrudes a generally rectangular board. A generally similar extrusion system and a preferred extrusion system is shown in U.S. Patent No. 3,966,381.

A second method is to place two extruders in series, with the blowing agent being added to the first extruder, a mixing device, such as an interfacial surface generator (ISG), between extruders or the second extruder. The first extruder heat plastifies the polymer, but may also be a mixing device if the blowing agent is added to the first extruder. The second extruder is a cooler, but may also be a mixing device if the blowing agent is added to the second extruder. After exiting the second extruder, the heat-plastified polymer stream may be further mixed and/or cooled prior to exiting the die.

As used in this specification, the term "mixing device" denotes where the blowing agent is added. This includes, for example, ISGs, extruders or rotary mixers.

The term "cooling device" denotes a device which cools the heat-plastified polymer stream. This includes, for example, extruders, ISGs and coolers.

In the preparation of foams in accordance with the present invention, the blowing agent may be added to the resin in any convenient manner. Generally the blowing agent mixture is pumped into heat-plastified alkenyl aromatic resin and admixed therewith prior to extrusion to form foam. The blowing agent may be admixed and pumped as a combination stream into the heat-plastified resin, or they may be supplied as separate streams. Adequate mixing of the blowing agents into the heat-plastified resin is required in order to obtain a product of desirable uniformity. Such mixing may be accomplished by a variety of means including rotary mixers such as extruders, so-called static mixers or interfacial surface generators, such as are utilized in U.S. Patent Nos. 3,751,377 and 3,817,669.

Extruded alkenyl aromatic synthetic resin foams are produced according to the process of the present invention in a manner similar to that shown in U.S. Patent No. 2,669,751 by feeding the alkenyl aromatic synthetic resin into an extruder where the resin is heat-plasitifed.

The heat-plastified resin is then passed through a pressure control device, such as a gear pump. The pressure control device controls the discharge pressure of the extruder and more importantly the inlet pressure to the mixing device, such as a rotary pin mixer.

The blowing agent is introduced into the rotary pin mixer and the desired pressure is obtained by adjusting the pressure control device and the temperature of the mixing device.

The discharge from the mixing device is then passed through a cooling device, such as one or more heat exchangers of the variety shown in U.S. Patent No. 3,014,702.

The discharge from the cooling device is then passed through the die and expanded. The foam examples in this specification are expanded at atmospheric pressure ; however, the foam expansion could also occur in

subatmospheric pressure.

By maintaining a constant die inlet pressure and adjusting the pressure drop from the mixer's inlet to the die's inlet over a range of pressure drops such that the quality of the extruded foam's surface changes form poor to good (or vice versa), a "critical minimum pressure drop", $\Delta P_C$, for a given blowing agent can be determined. This critical pressure drop depends on the blowing agent and alkenyl aromatic synthetic resin combination and is easily determined by simple experimentation which consists of holding the die pressure constant while adjusting the mixing device pressure until extruded foam having a good skin and no blow holes is produced with no gassing at the die.

The critical pressure drop is then determined at that point and is the difference between the mixing device pressure and the die pressure.

Knowing the critical pressure drop, which is for a given blowing agent and alkenyl aromatic synthetic resin, the die pressure, which must be greater than atmospheric pressure, can be adjusted. However, that die pressure plus the critical pressure drop for that blowing agent must also be greater than the vapor pressure of the blowing agent and is the minimum pressure which must be maintained in the mixing device in order to produce extruded foam having a good skin, virtually no blow holes and little or no gassing at the die.

Restated simply, the sum of the die pressure and the empirically determined critical pressure drop, is the minimum mixing pressure at which the mixing device must be maintained to produce quality extruded alkenyl aromatic synthetic resin foam.

The mixing device must be operated at least at the critical mixing pressure and can also be operated above the critical mixing pressure.

This requirement of a minimum operating pressure in the mixing device is not method, process or system dependent ; the numerical value of the minimum acceptable operating pressure in the mixing device is primarily dependent on the blowing agent used and much less dependent on the specific extrusion process (such as those shown in Figures 1-19) as well as the precise location of pressure gauges etc. Accordingly, this invention applies to any extrusion method for producing alkenyl aromatic synthetic resin foam.

The following examples illustrate ways in which the principle of the invention has been applied, but should not be construed as limiting the invention.

Foams were prepared from several different polymers, a large number of different blowing agents, using apparatus shown schematically in Figure 3. In particular, essentially, a $1\frac{1}{2}$ inch (3.8 cm) extruder was used in combination with a $\frac{1}{2}$ horsepower (370 w) gear pump manufactured by Zenith ; a mixer of the rotary pin type disclosed in U.S. Patent No. 3,770,668 ; flat plate coolers of the type shown in U.S. Patent 3,014,702 ; and a slit extrusion die having an adjustable gap. The polymer throughput rate was 10 pounds (4.5 kg) per hour. Tables 1-5 show the processing conditions and some of the product properties, as well as the empirically determined values of critical pressure drop, $\Delta P_C$, for each of the exemplified combinations of polymer and blowing agents.

The following abbreviations are employed in this specification, including the drawings ;

PS polystyrene having a weight average molecular weight of about 200,000 as measured by the gel permeation chromatograph method

SAA styrene/acrylic acid copolymer having a weight average molecular weight of about 165,000 as measured by the gel permeation chromatograph method

| | |
|---|---|
| CISAA | calcium ionomer of SAA |
| BA | blowing agent |
| pph | parts per hundred |
| °F | degrees Fahrenheit |
| RPM | revolutions per minute |
| psi | pounds per square inch |
| $T_{mixer}$ | temperature of the mixer |
| °C | degrees Centigrade |
| pcf | pounds per cubic foot |
| mm | millimeters |
| MD | machine direction |

| | |
|---|---|
| TD | transverse direction |
| Tf | foaming temperature at the die |
| Poor | poor skin, blow holes and gassing at the die |
| Fair | relatively good skin |
| Good | good skin, no blow holes |
| Excellent | excellent skin, no blow holes |
| $P_M$ | Pressure at mixer's inlet |
| $P_D$ | Pressure at die's inlet |
| $\otimes$ | Throttle valve |
| 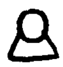 | Gear pump |
| $\Delta P$ | Pressure drop (or $P_M - P_D$) |
| $\Delta P_C$ | Critical pressure drop |
| $P_{MC}$ | The value of $P_M$ when $\Delta P_C$ was measured (also called critical mixing pressure). |

Table 1 illustrates the examples of good quality and poor quality polystyrene foams prepared above and below the critical pressure at the blowing agent mixing section for a given typical die pressure, respectively. Foams prepared with a blowing agent containing at least one low permeability blowing agent component (or long term insulating blowing agent component), such as CFC-12, CFC-142B, or mixtures of the two, have a k-factor (thermal conductivity of foam as measured in British thermal units-inch per hour per square foot per degree Fahrenheit) after 5 years of aging at ambient temperature in air of at least 0.03 units (0.004 w/(m.k) less than the k-factor of the same foam wherein the blowing agent has been replaced by air.

Table 1 LONG-TERM INSULATING BLOWING AGENTS FOR POLYSTYRENE FOAMS

| Example No. | Poly-mer Type | Blowing Agent Systems (Components in pph) | Total BA Level (pph) | Foam Temp $T_F$ (°F) | Mixer RPM | $P_M$ Mixer Inlet Pressure (psi) | $T_{Mixer}$ (°C) | $P_D$ Die Inlet Pressure (psi) | $P_{MC}$ Critical Pressure (psi) | $\Delta P_C$ Critical Pressure Drop (psi) | Foam Density (pcf) | Foam Cell Size (mm) | Compressive Strength (psi) | | Quality of Foam Surface |
|---|---|---|---|---|---|---|---|---|---|---|---|---|---|---|---|
| | | | | | | | | | | | | | MD | TD | |
| 1A | PS | CFC-12 | 14.4 | 130 | 10 | 1550 | 158 | 1090 | 1530 | 440 | 2.46 | 0.1 | ---- | ---- | Good |
| 1B | " | " | " | " | " | 1510 | 164 | 1090 | | | 2.27 | 0.1 | ---- | ---- | Poor |
| 2A | PS | CFC-142B | 11.9 | 130 | 10 | 1000 | 180 | 650 | 1020 | 370 | 3.09 | 1.2 | 11.5 | 59.7 | Poor |
| 2B | " | " | " | " | " | 1030 | 173 | 650 | | | 3.11 | 1.8 | 17.2 | 77 | Good |
| 3A | PS | 6.5 CFC-12/ 6.5 CFC 142B | 13.0 | 130 | 10 | 1300 | 156 | 840 | 1190 | 350 | 2.42 | 0.59 | 22.3 | 28.0 | Good |
| 3B | " | | " | " | " | 1170 | 172 | 840 | | | 2.28 | 0.43 | 36.0 | 32.1 | Poor |
| 4A | PS | 10.8 CFC-12/ 1.1 $CO_2$ | 11.9 | 130 | 10 | 1750 | 155 | 1210 | 1660 | 460 | 2.33 | 0.1 | ---- | ---- | Good |
| 4B | " | | " | " | " | 1690 | 159 | 1210 | | | 2.37 | 0.1 | ---- | ---- | Good |
| 4C | " | " | " | " | " | 1650 | 166 | 1210 | | | 2.27 | 0.1 | ---- | ---- | Fair |
| 4D | " | " | " | " | " | 1610 | 175 | 1210 | | | 2.34 | 0.1 | ---- | ---- | Poor |
| 5A | PS | 9.0 CFC-142B/ 1.1 $CO_2$ | 10.1 | 130 | 10 | 1520 | 168 | 1200 | 1520 | 320 | 2.19 | 0.41 | 43.5 | 32.8 | Good |
| 5B | " | | " | " | " | 1260 | 174 | 1200 | | | 2.27 | 0.59 | 36.4 | 37.2 | Poor |
| 6A | PS | CFC 142B/CFC-12/$CO_2$ 4.9/4.9/1.1 | 10.9 | 130 | 10 | 1430 | 159 | 970 | 1450 | 480 | ---- | ---- | ---- | ---- | Poor |
| 6B | " | | " | " | " | 1480 | 159 | 970 | | | ---- | ---- | ---- | ---- | Good |
| 7A | PS | CFC 22/$CO_2$/CFC-12 4.0/1.3/6.0 | 11.3 | 135 | 10 | 1370 | 178 | 850 | 1430 | 580 | 2.64 | 0.90 | ---- | ---- | Poor |
| 7B | " | | " | " | " | 1500 | 164 | 850 | | | 2.46 | 0.85 | 32.6 | 49.3 | Good |
| 8A | PS | CFC-22/$CO_2$/CFC-142B 3.7/1.3/7.0 | 12.0 | 130 | 10 | 1210 | 152 | 910 | 1180 | 270 | 1.82 | 0.22 | ---- | ---- | Good |
| 8B | " | | " | " | " | 1160 | 159 | 910 | | | 1.77 | 0.26 | ---- | ---- | Poor |

TABLE 1 LONG-TERM INSULATING BLOWING AGENTS FOR POLYSTYRENE FOAMS (CONTINUED)

| Example No | Polymer Type | Blowing Agent Systems (Components in pph) | Total BA Level (pph) | Foam Temp. $T_F$ (°F) | Mixer RPM | $P_M$ Mixer Inlet Pressure (psi) | $T_{Mixer}$ (°C) | $P_D$ Die Inlet Pressure (psi) | $P_{MC}$ Critical Pressure (psi) | $\Delta P_C$ Critical Pressure Drop (psi) | Foam Density (pcf) | Foam Cell Size (mm) | Compressive Strength (psi) | | Quality of Foam Surface |
|---|---|---|---|---|---|---|---|---|---|---|---|---|---|---|---|
| | | | | | | | | | | | | | MD | TD | |
| 9A | PS | $CFC\text{-}142B/CO_2/C_2H_6$ | 9.3 | 130 | 10 | 1360 | 154 | 900 | 1370 | 470 | 2.20 | 0.16 | ---- | ---- | Poor |
| 9B | " | 6.7/0.88/1.76 | " | " | " | 1380 | 164 | 900 | | | 2.13 | 0.19 | ---- | ---- | Good |
| 10A | PS | $CFC\text{-}142B/CO_2/C_2H_6$ | 8.9 | 130 | 10 | 1420 | 162 | 940 | 1430 | 490 | 2.25 | 0.24 | ---- | ---- | Poor |
| 10B | " | 6.0/1.3/1.6 | " | " | " | 1450 | 162 | 940 | | | 2.16 | 0.13 | ---- | ---- | Good |
| 11A | PS | $CFC\text{-}142B/CO_2/C_3H_8$ | 9.6 | 130 | 10 | 1450 | 160 | 1070 | 1400 | 330 | 2.03 | 0.19 | ---- | ---- | Good |
| 11B | " | 6.0/1.3/2.3 | " | " | " | 1370 | 160 | 1070 | | | 1.86 | 0.16 | ---- | ---- | Poor |
| 12A | PS | $CFC\text{-}12/CO_2/C_3H_8$ | 10.1 | 130 | 10 | 1500 | 157 | 1070 | 1460 | 390 | 2.14 | 0.13 | ---- | ---- | Good |
| 12B | " | 6.0/1.3/2.8 | " | " | " | 1420 | 160 | 1070 | | | 2.09 | 0.13 | ---- | ---- | Poor |
| 13A | PS | $CFC\text{-}12/CO_2/C_2H_6$ | 9.2 | 130 | 10 | 1860 | 156 | 1300 | 1830 | 530 | 2.20 | 0.13 | ---- | ---- | Good |
| 13B | " | 6.0/1.3/1.9 | " | " | " | 1800 | 159 | 1300 | | | 2.28 | 0.13 | ---- | ---- | Poor |

TABLE 1 LONG-TERM INSULATING BLOWING AGENTS FOR POLYSTYRENE FOAMS (CONTINUED)

| Example No | Polymer Type | Blowing Agent Systems (Components in pph) | Total BA Level (pph) | Foam Temp. $T_F$ (°F) | Mixer RPM | $P_M$ Mixer Inlet Pressure (psi) | $T_{Mixer}$ (°C) | $P_D$ Die Inlet Pressure (psi) | $P_{MC}$ Critical Pressure (psi) | $\Delta P_C$ Critical Pressure Drop (psi) | Foam Density (pcf) | Foam Cell Size (mm) | Compressive Strength (psi) | | Quality of Foam Surface |
|---|---|---|---|---|---|---|---|---|---|---|---|---|---|---|---|
| | | | | | | | | | | | | | MD | TD | |
| 14A<br>14B | PS<br>" | $EtCl/CO_2/CFC\text{-}12/C_2H_6$<br>3 5/1 3/6 0/0 25 | 11 1<br>" | 130<br>" | 10<br>" | 1120<br>1070 | 154<br>" | 800<br>800 | 1090 | 290 | 1.77<br>1.77 | 0 28<br>0.28 | ----<br>---- | ----<br>---- | Good<br>Poor |
| 15A<br>15B | PS<br>" | $EtCl/CO_2/CFC\text{-}12/C_3H_8$<br>3 5/1.3/6 0/0 37 | 11.2<br>" | 130<br>" | 10<br>" | 1150<br>1180 | 179<br>165 | 880<br>880 | 1160 | 280 | 1.87<br>1.81 | 0.59<br>0.50 | 20.9<br>---- | 32 4<br>36 8 | Poor<br>Good |
| 16A<br>16B | PS<br>" | $EtCl/CO_2/CFC\text{-}12/CFC\text{-}22$<br>3 5/1.3/6.0/0 7 | 11.5<br>" | 130<br>" | 10<br>" | 1160<br>1180 | 178<br>169 | 900<br>900 | 1170 | 270 | 1.79<br>1.82 | 0 46<br>0 50 | ----<br>---- | ----<br>---- | Poor<br>Good |
| 17A<br>17B | PS<br>" | $EtCl/Co_2/CFC\text{-}142B/C_2H_6$<br>2 5/1 3/6 0/0 4 | 10 2<br>" | 130<br>" | 10<br>" | 1000<br>1040 | 169<br>159 | 720<br>720 | 1020 | 300 | 2.07<br>2 00 | 0 96<br>2 71 | ----<br>---- | ----<br>---- | Poor<br>Good |
| 18A<br>18B | PS<br>" | $EtCl/CO_2/CFC\text{-}142B/C_3H_8$<br>2 5/1 3/6 0/0 6 | 10.4<br>" | 130<br>" | 10<br>" | 1080<br>1030 | 154<br>161 | 800<br>800 | 1050 | 250 | 1.73<br>1.96 | 0.59<br>1.08 | 26.1<br>---- | 30 3<br>37 3 | Good<br>Poor |
| 19A<br>19B | PS<br>" | $EtCl/CO_2/CFC\text{-}142B/CFC\text{-}22$<br>2 5/1/3/6 0/1 2 | 11 0<br>" | 130<br>" | 10<br>" | 890<br>870 | 154<br>156 | 590<br>590 | 880 | 290 | 2.11<br>2.05 | 2 71<br>2 71 | 10.5<br>9 9 | 45 9<br>47 9 | Good<br>Poor |
| 20A<br>20B | PS<br>" | $H_2O/CO_2/CFC\text{-}142B$<br>1 0/1 3/6 0 | 8.3<br>" | 130<br>" | 10<br>" | 1140<br>1270 | 179<br>168 | 790<br>790 | 1200 | 410 | 1.96<br>2.33 | 2 32<br>1 62 | 16 8<br>23 4 | 30 8<br>34 4 | Poor<br>Good |
| 21A<br>21B | PS<br>" | $H_2O/CO_2/CFC\text{-}12$<br>1 0/1 3/6 5 | 8 8 .<br>" | 130<br>" | 10<br>" | 1540<br>1510 | 154<br>157 | 1070<br>1070 | 1525 | 455 | 1.86<br>1.96 | 0 38<br>0 31 | ---<br>---- | --<br>---- | Good<br>Poor |

Table 1 Metric Equivalents

| Example No. | Foam Temp $T_F$ (°C) | $P_M$ Mixer inlet Pressure (MPa) | $P_D$ Die inlet Pressure (MPa) | $P_{MC}$ Critical Pressure (MPa) | $\Delta P_C$ Critical Pressure Drop (MPa) | Foam Density ($kg/m^3$) | Compressive Strength (kPa) MD | TD |
|---|---|---|---|---|---|---|---|---|
| 1A | 54 | 10.7 | 7.5 | 10.5 | 3.0 | 39.4 | - | - |
| 1B | 54 | 10.4 | 7.5 | | | 36.4 | - | - |
| 2A | 54 | 6.9 | 4.5 | 7.0 | 2.6 | 49.5 | 79 | 412 |
| 2B | 54 | 7.1 | 4.5 | | | 49.8 | 119 | 531 |
| 3A | 54 | 9.0 | 5.8 | 8.2 | 2.4 | 38.8 | 154 | 193 |
| 3B | 54 | 8.1 | 5.8 | | | 36.5 | 248 | 221 |
| 4A | 54 | 12.1 | 8.4 | 11.4 | 3.2 | 37.3 | - | - |
| 4B | 54 | 11.7 | 8.4 | | | 38.0 | - | - |
| 4C | 54 | 11.4 | 8.4 | | | 36.4 | - | - |
| 4D | 54 | 11.1 | 8.4 | | | 37.5 | - | - |
| 5A | 54 | 10.5 | 8.3 | 10.5 | 2.2 | 35.1 | 300 | 226 |
| 5B | 54 | 8.7 | 8.3 | | | 36.4 | 251 | 256 |
| 6A | 54 | 9.9 | 6.7 | 10.0 | 3.3 | - | - | - |
| 6B | 54 | 10.2 | 6.7 | | | - | - | - |
| 7A | 57 | 9.5 | 5.9 | 9.9 | 4.0 | 42.3 | - | - |
| 7B | 57 | 10.3 | 5.9 | | | 39.4 | 225 | 340 |
| 8A | 54 | 8.3 | 6.3 | 8.1 | 1.9 | 29.2 | - | - |
| 8B | 54 | 8.0 | 6.3 | | | 28.4 | - | - |

Table 1 Metric Equivalents (Continued)

| Example No. | Foam Temp $T_F$ (°C) | $P_M$ Mixer inlet Pressure (MPa) | $P_D$ Die inlet Pressure (MPa) | $P_{MC}$ Critical Pressure (MPa) | $\Delta P_C$ Critical Pressure Drop (MPa) | Foam Density (kg/m$^3$) | Compressive Strength (kPa) MD | TD |
|---|---|---|---|---|---|---|---|---|
| 9A | 54 | 9.4 | 6.2 | 9.4 | 3.2 | 35.2 | - | - |
| 9B | 54 | 9.5 | 6.2 | | | 34.1 | - | - |
| 10A | 54 | 9.8 | 6.5 | 9.9 | 3.4 | 36.0 | - | - |
| 10B | 54 | 10.0 | 6.5 | | | 34.6 | - | - |
| 11A | 54 | 10.0 | 7.4 | 9.7 | 2.3 | 32.5 | - | - |
| 11B | 54 | 9.4 | 7.4 | | | 29.8 | - | - |
| 12A | 54 | 10.3 | 7.4 | 10.1 | 2.7 | 34.3 | - | - |
| 12B | 54 | 9.8 | 7.4 | | | 33.5 | - | - |
| 13A | 54 | 12.8 | 9.0 | 12.6 | 3.7 | 35.2 | - | - |
| 13B | 54 | 12.4 | 9.0 | | | 36.5 | - | - |

Table 1 Metric Equivalents (Continued)

| Example No. | Foam Temp $T_F$ (°C) | $P_M$ Mixer inlet Pressure (MPa) | $P_D$ Die inlet Pressure (MPa) | $P_{MC}$ Critical Pressure (MPa) | $\Delta P_C$ Critical Pressure Drop (MPa) | Foam Density (kg/m$^3$) | Compressive Strength (kPa) MD | Compressive Strength (kPa) TD |
|---|---|---|---|---|---|---|---|---|
| 14A | 54 | 7.7 | 5.5 | 7.5 | 2.0 | 28.4 | - | - |
| 14B | 54 | 7.4 | 5.5 | | | 28.4 | - | - |
| 15A | 54 | 7.9 | 6.1 | 8.0 | 1.9 | 30.0 | 144 | 223 |
| 15B | 54 | 8.1 | 6.1 | | | 29.0 | - | 254 |
| 16A | 54 | 8.0 | 6.2 | 8.1 | 1.9 | 28.7 | - | - |
| 16B | 54 | 8.1 | 6.2 | | | 29.2 | - | - |
| 17A | 54 | 6.9 | 5.0 | 7.0 | 2.1 | 33.2 | - | - |
| 17B | 54 | 7.2 | 5.0 | | | 32.0 | - | - |
| 18A | 54 | 7.4 | 5.5 | 7.2 | 1.7 | 27.7 | 180 | 209 |
| 18B | 54 | 7.1 | 5.5 | | | 31.4 | - | 257 |
| 19A | 54 | 6.1 | 4.1 | 6.1 | 2.0 | 33.8 | 72 | 317 |
| 19B | 54 | 6.0 | 4.1 | | | 32.8 | 68 | 330 |
| 20A | 54 | 7.9 | 5.4 | 8.3 | 2.8 | 31.4 | 116 | 212 |
| 20B | 54 | 8.8 | 5.4 | | | 37.3 | 161 | 237 |
| 21A | 54 | 10.6 | 7.4 | 10.5 | 3.1 | 29.8 | - | - |
| 21B | 54 | 10.4 | 7.4 | | | 31.4 | - | - |

Table 2 shows examples of excellent, good and poor quality SAA foams (with 3 weight percent polymerized acrylic acid by total resin weight) prepared above, and in some cases, below the critical pressure required in the mixing device for a given typical die pressure.

This table also shows that the experimentation required to determine the critical pressure drop is simple and not extensive, as shown by the second example in Table 2.

TABLE 2 LONG-TERM INSULATING BLOWING AGENTS FOR SAA (97/3) COPOLYMER FOAMS

| Example No | Polymer Type | Blowing Agent Systems (Components in pph) | Total BA Level (pph) | Foam Temp $T_F$ (°F) | Mixer RPM | $P_M$ Mixer Inlet Pressure (psi) | $T_{Mixer}$ (°C) | $P_D$ Die Inlet Pressure (psi) | $P_{MC}$ Critical Pressure (psi) | $\Delta P_C$ Critical Pressure Drop (psi) | Foam Density (pcf) | Foam Cell Size (mm) | Compressive Strength (psi) | | Quality of Foam Surface |
|---|---|---|---|---|---|---|---|---|---|---|---|---|---|---|---|
| | | | | | | | | | | | | | MD | TD | |
| 22A | SAA (3%AA) | CFC-12/$CO_2$ | 12.6 | 130 | 10 | 1640 | 182 | 1110 | 1690 | 580 | 2.58 | 0.11 | ---- | 75.4 | Poor |
| 22B | " | 11.6/1.0 | " | " | " | 1730 | 169 | 1110 | | | 2.57 | 0.13 | ---- | 77.0 | Good |
| 22C | " | " | " | " | " | 2040 | 164 | 1450* | | | 2.57 | 0.22 | ---- | 67.0 | Excellent |
| 23A | SAA (3%AA) | CFC-142B | 11.9 | 130 | 10 | 1170 | 168 | 770 | 1110 | 340 | 2.84 | 0.76 | ---- | 63.1 | Good |
| 23B | " | " | " | " | " | 1110 | 171 | 770 | | | 3.18 | 1.08 | ---- | 51.8 | Good |
| 23C | " | " | " | " | " | 1090 | 176 | 770 | | | 2.99 | 1.08 | ---- | 57.3 | Poor |
| 23D | " | " | " | " | " | 1400 | 176 | 1000* | | | 2.84 | 1.08 | ---- | 55.5 | Good |
| 24A | SAA (3%AA) | CFC-142B/$CO_2$ | 10.7 | 130 | 10 | 1230 | 180 | 900 | 1290 | 390 | 2.70 | 0.81 | 26.0 | 59.0 | Poor |
| 24B | " | 9.7/1.0 | " | " | " | 1350 | 163 | 900 | | | 2.70 | 0.85 | 28.1 | 61.7 | Good |
| 25A | SAA (3%AA) | CFC-142B/CFC-12 | 13.0 | 130 | 10 | 1320 | 164 | 970 | 1290 | 320 | 2.26 | 0.19 | ---- | ---- | Good |
| 25B | " | 6.5/6.5 | " | " | " | 1260 | 168 | 970 | | | 2.28 | 0.30 | ---- | ---- | Poor |
| 26A | SAA (3%AA) | CFC-142B/$CO_2$/CFC-12 | 11.6 | 130 | 10 | 1290 | 161 | 910 | 1290 | 380 | 2.74 | 0.31 | ---- | 57.4 | Good |
| 26B | " | 5.3/1.0/5.3 | " | " | " | 1250 | 173 | 910 | | | 2.25 | 0.32 | ---- | 57.8 | Poor |

*Pressure was increased by decreasing the die gap.

TABLE 2 LONG-TERM INSULATING BLOWING AGENTS FOR SAA (97/3) COPOLYMER FOAMS (CONTINUED)

| Example No. | Polymer Type | Blowing Agent Systems (Components in pph) | Total BA Level (pph) | Foam Temp $T_F$ (°F) | Mixer RPM | Mixer Inlet Pressure (psi) | $T_{Mixer}$ (°C) | $P_D$ Die Inlet Pressure (psi) | $P_{MC}$ Critical Pressure (psi) | $\Delta P_C$ Critical Pressure Drop (psi) | Foam Density (pcf) | Foam Cell Size (mm) | Compressive Strength (psi) | | Quality of Foam Surface |
|---|---|---|---|---|---|---|---|---|---|---|---|---|---|---|---|
| | | | | | | | | | | | | | MD | TD | |
| 27A | SAA (3%AA) | $CFC-22/CO_2/CFC-12$ 4.0/1.3/6.0 | 11.3 | 130 | 10 | 1480 | 181 | 1000 | 1490 | 490 | 2.04 | 0.46 | 31.9 | 62.8 | Poor |
| 27B | " | | " | " | " | 1490 | 168 | 1000 | | | 2.39 | 0.29 | 33.6 | 57.4 | Good |
| 27C | " | " | " | " | " | 2010 | 164 | 1450* | | | 2.44 | 0.36 | 38.4 | 51.8 | Good |
| 28A | SAA (3%AA) | $CFC-22/CO_2/CFC-142B$ 3.7/1.3/7.0 | 12.0 | 130 | 10 | 1470 | 160 | 1120 | 1470 | 350 | 2.11 | 0.41 | ---- | 52.4 | Good |
| 28B | " | | " | " | " | 1390 | 170 | 1120 | | | 2.08 | 0.26 | ---- | ---- | Poor |
| 29A | SAA (3%AA) | $EtCl/CO_2/CFC-12/CFC-142B$ 3.5/1.3/3.2/3.2 | 11.2 | 130 | 10 | 1170 | 163 | 760 | 1150 | 390 | 2.15 | 0.46 | --- | 51.5 | Good |
| 29B | " | | " | " | " | 1120 | 175 | 760 | | | 2.33 | 1.16 | ---- | ---- | Poor |
| 30A | SAA (3%AA) | H2O/CO2/CFC-12 1.1/1.3/6.5 | 8.9 | 130 | 10 | 1340 | 179 | 960 | 1370 | 410 | 2.30 | 0.50 | ---- | 48.8 | Poor |
| 30B | " | | " | " | " | 1400 | 166 | 960 | | | 2.36 | 0.34 | ---- | 52.2 | Good |
| 31A | " | H2O/CO2/CFC-142B 0.9/1.3/6.0 | 8.2 | 130 | 10 | 1290 | 167 | 820 | 1260 | 440 | 2.11 | 2.0 | 18.1 | 40.7 | Good |
| 31B | " | | " | " | " | 1240 | 179 | 820 | | | 2.97 | 2.7 | 18.1 | 38.0 | Poor |

*Pressure was increased by decreasing the die gap.

Table 2 Metric Equivalents

| Example No. | Foam Temp $T_F$ (°C) | $P_M$ Mixer inlet Pressure (MPa) | $P_D$ Die inlet Pressure (MPa) | $P_{MC}$ Critical Pressure (MPa) | $\Delta P_C$ Critical Pressure Drop (MPa) | Foam Density (kg/$m^3$) | Compressive Strength (kPa) | |
|---|---|---|---|---|---|---|---|---|
| | | | | | | | MD | TD |
| 22A | 54 | 11.3 | 7.7 | 11.7 | 4.0 | 41.3 | - | 520 |
| 22B | 54 | 11.9 | 7.7 | | | 41.2 | - | 531 |
| 22C | 54 | 14.1 | 10.0 | | | 41.2 | - | 462 |
| 23A | 54 | 8.1 | 5.3 | 7.7 | 2.3 | 45.5 | - | 435 |
| 23B | 54 | 7.7 | 5.3 | | | 50.9 | - | 357 |
| 23C | 54 | 7.5 | 5.3 | | | 47.9 | - | 395 |
| 23D | 54 | 9.7 | 6.9 | | | 45.5 | - | 383 |
| 24A | 54 | 8.5 | 6.2 | 8.9 | 2.7 | 43.2 | 248 | 407 |
| 24B | 54 | 9.3 | 6.2 | | | 43.2 | 194 | 425 |
| 25A | 54 | 9.1 | 6.7 | 8.9 | 2.2 | 36.2 | - | - |
| 25B | 54 | 8.7 | 6.7 | | | 36.5 | - | - |
| 26A | 54 | 8.9 | 6.3 | 8.9 | 2.6 | 43.9 | - | 396 |
| 26B | 54 | 8.6 | 6.3 | | | 36.0 | - | 399 |

Table 2 Metric Equivalents (Continued)

| Example No. | Foam Temp $T_F$ (°C) | $P_M$ Mixer inlet Pressure (MPa) | $P_D$ Die inlet Pressure (MPa) | $P_{MC}$ Critical Pressure (MPa) | $\Delta P_C$ Critical Pressure Drop (MPa) | Foam Density (kg/m$^3$) | Compressive Strength (kPa) MD | TD |
|---|---|---|---|---|---|---|---|---|
| 27A | 54 | 10.2 | 6.9 | 10.3 | 3.4 | 32.7 | 220 | 433 |
| 27B | 54 | 10.3 | 6.9 | | | 38.3 | 232 | 396 |
| 27C | 54 | 13.9 | 10.0 | | | 39.1 | 265 | 357 |
| 28A | 54 | 10.1 | 7.7 | 10.1 | 2.4 | 33.8 | - | 361 |
| 28B | 54 | 9.6 | 7.7 | | | 33.3 | - | - |
| 29A | 54 | 8.1 | 5.2 | 7.9 | 2.7 | 34.4 | - | 355 |
| 29B | 54 | 7.7 | 5.2 | | | 37.3 | - | - |
| 30A | 54 | 9.2 | 6.6 | 9.4 | 2.8 | 36.8 | - | 336 |
| 30B | 54 | 9.7 | 6.6 | | | 37.8 | - | 360 |
| 31A | 54 | 8.9 | 5.7 | 8.7 | 3.0 | 33.8 | 125 | 281 |
| 31B | 54 | 8.5 | 5.7 | | | 47.6 | 125 | 262 |

TABLE 3 LONG-TERM INSULATING BLOWING AGENTS FOR CISAA (97/3) COPOLYMER FOAMS

| Example No | Polymer Type | Blowing Agent Systems (Components in pph) | Total BA Level (pph) | Foam Temp. $T_f$ (°F) | Mixer RPM | $P_M$ Mixer Inlet Pressure (psi) | $T_{Mixer}$ (°C) | PD Die Pressure (psi) | $P_{MC}$ Critical Pressure (psi) | $\Delta P_C$ Critical Pressure Drop (psi) | Foam Density (pcf) | Foam Cell Size (mm) | Compressive Strength (psi) MD | Compressive Strength (psi) TD | Quality of Foam Surface |
|---|---|---|---|---|---|---|---|---|---|---|---|---|---|---|---|
| 32A | SAA (3%AA) + | CFC-12/$CO_2$ | 12.6 | 130 | 10 | 1610 | 183 | 1180 | 1700 | 520 | 2.64 | 0.10 | ---- | 65.2 | Poor |
| 32B | 0.5 pph $Ca(OH)_2$ | 11.6/1.0 | " | " | " | 1700 | 164 | 1180 | | | 2.67 | 0.10 | ---- | 70.9 | Good |
| 33A | " | CFC-142B | 11.9 | 130 | 10 | 1050 | 169 | 750 | 1010 | 260 | 2.12 | 0.16 | ---- | 43.3 | Good |
| 33B | " | " | " | " | " | 990 | 171 | 750 | | | 2.12 | 0.14 | ---- | 39.7 | Poor |
| 34A | " | CFC-142B/$CO_2$ | 10.7 | 130 | 10 | 1320 | 182 | 860 | 1350 | 490 | 2.75 | 0.13 | ---- | 55.2 | Poor |
| 34B | " | 9.7/1.0 | " | " | " | 1380 | 168 | 860 | | | 2.86 | 0.14 | ---- | 60.9 | Good |
| 34C | " | " | " | " | " | 1570 | 166 | 1040* | | | 2.62 | 0.14 | ---- | 75.2 | Excellent |
| 35A | " | CFC-12/CFC-142B | 13.0 | 130 | 10 | 1200 | 178 | 820 | 1310 | 490 | 2.78 | 0.11 | ---- | 63.7 | Poor |
| 35B | " | 6.5/6.5 | " | " | " | 1260 | 167 | 820 | | | 2.73 | 0.13 | ---- | ---- | Fair |
| 35C | " | " | " | | | 1720 | 165 | 1220 | | | 2.79 | 0.13 | ---- | ---- | Good |
| 36A | " | CFC-142B/$CO_2$/CFC-12 | 10.9 | 130 | 10 | 2240 | 161 | 1680 | 2200 | 520 | 2.06 | 0.13 | ---- | ---- | Good |
| 36B | " | 4.9/1.1/4.9 | " | " | " | 2160 | 174 | 1680 | | | 2.83 | 0.11 | ---- | ---- | Poor |
| 37A | " | CFC-22/$CO_2$/CFC-12 | 13.0 | 130 | 10 | 1950 | 170 | 1450 | 1950 | 500 | 2.54 | 0.11 | ---- | ---- | Good |
| 37B | " | 4.7/1.3/7.0 | " | " | " | 1900 | 175 | 1450 | | | 2.65 | 0.11 | ---- | ---- | Poor |
| 38A | " | CFC-22/$CO_2$/CFC-142B | 12.0 | 130 | 10 | 1570 | 180 | 1300 | 1630 | 330 | 2.26 | 0.13 | ---- | ---- | Poor |
| 38B | " | 3.7/1.3/7.0 | " | " | " | 1630 | 159 | 1300 | | | 2.32 | 0.11 | ---- | ---- | Good |

*Pressure was increased by decreasing the die gap.

Table 3 shows examples of excellent, good and poor quality ionomeric SAA foams (with 3 weight percent polymerized acrylic acid by total resin weight) prepared above, and in some cases, below the critical pressure required in the mixing device for a given typical die pressure.

TABLE 3 LONG-TERM INSULATING BLOWING AGENTS FOR CISAA (97/3) COPOLYMER FOAMS (CONTINUED)

| Example No | Polymer Type | Blowing Agent Systems (Components in pph) | Total BA Level (pph) | Foam Temp. $T_F$ (°F) | Mixer RPM | $P_M$ Mixer Inlet Pressure (psi) | $T_{Mixer}$ (°C) | $P_D$ Die Inlet Pressure (psi) | $P_{MC}$ Critical Pressure (psi) | $\Delta P_C$ Critical Pressure Drop (psi) | Foam Density (pcf) | Foam Cell Size (mm) | Compressive Strength (psi) | | Quality of Foam Surface |
|---|---|---|---|---|---|---|---|---|---|---|---|---|---|---|---|
| | | | | | | | | | | | | | MD | TD | |
| 39A | SAA (3%AA) + | | 11.8 | 130 | 10 | 1280 | 161 | 970 | 1260 | 290 | 2.36 | 0.13 | ---- | ---- | Good |
| 39B | 0.5 pph $Ca(OH)_2$ | $EtCl/CO_2/CFC$-12 3.5/1.3/7.0 | " | " | " | 1230 | 161 | 970 | | | 2.48 | 0.10 | ---- | ---- | Poor |
| 40A | " | $EtCl/CO_2/CFC$-142B 3.2/1.3/6.3 | 10.8 | 130 | 10 | 1160 | 164 | 860 | 1160 | 300 | 1.68 | 0.13 | ---- | ---- | Good |
| 40B | " | | " | " | " | 1150 | 171 | 860 | | | 2.03 | 0.22 | ---- | ---- | Poor |
| 41A | " | $EtCl/CO_2/CFC$-12/CFC-142B 3.5/1.3/3.2/3.2 | 11.2 | 130 | 10 | 1130 | 163 | 840 | 1070 | 230 | 2.32 | 0.30 | ---- | ---- | Good |
| 41B | " | | " | " | " | 1000 | 173 | 840 | | | 2.48 | 0.31 | ---- | 50.2 | Poor |
| 42A | SAA (3%AA) + | | 8.9 | 130 | 10 | 1270 | 179 | 820 | 1370 | 550 | 2.90 | 0.23 | 42.4 | 63.8 | Poor |
| 42B | 0.5 pph $Ca(OH)_2$ | $H_2O/CO_2/CFC$-12 1.1/1.3/6.5 | " | " | " | 1370 | 170 | 820 | | | 2.98 | 0.22 | 49.6 | 59.6 | Good |
| 43A | " | $H_2O/CO_2/CFC$-142B 0.9/1.3/6.0 | 8.2 | 130 | 10 | 1930 | 168 | 1200 | 1550 | 590 | 2.83 | 0.23 | 39.4 | 68.9 | Good |
| 43B | " | | " | " | " | 1530 | 180 | 960 | | | 2.91 | 0.23 | 44.7 | 69.2 | Poor |
| 43C | " | " | " | " | " | 1550 | 172 | 960 | | | 2.85 | 0.30 | 39.3 | 76.5 | Good |

Table 3 Metric Equivalents

| Example No. | Foam Temp $T_F$ (°C) | $P_M$ Mixer inlet Pressure (MPa) | $P_D$ Die inlet Pressure (MPa) | $P_{MC}$ Critical Pressure (MPa) | $\Delta P_C$ Critical Pressure Drop (MPa) | Foam Density ($kg/m^3$) | Compressive Strength (kPa) MD | Compressive Strength (kPa) TD |
|---|---|---|---|---|---|---|---|---|
| 32A | 54 | 11.1 | 8.1 | 11.7 | 3.6 | 42.3 | - | 450 |
| 32B | 54 | 11.7 | 8.1 | | | 42.8 | - | 489 |
| 33A | 54 | 7.2 | 5.2 | 7.0 | 1.8 | 34.0 | - | 299 |
| 33B | 54 | 6.8 | 5.2 | | | 34.0 | - | 274 |
| 34A | 54 | 9.1 | 5.9 | 9.3 | 3.4 | 44.1 | - | 381 |
| 34B | 54 | 9.5 | 5.9 | | | 45.8 | - | 420 |
| 34C | 54 | 10.8 | 7.2 | | | 42.0 | - | 519 |
| 35A | 54 | 8.3 | 5.7 | 9.0 | 3.4 | 44.5 | - | 439 |
| 35B | 54 | 8.7 | 5.7 | | | 43.7 | - | - |
| 35C | 54 | 11.9 | 8.4 | | | 44.7 | - | - |
| 36A | 54 | 15.4 | 11.6 | 15.2 | 3.6 | 33.0 | - | - |
| 36B | 54 | 14.9 | 11.6 | | | 45.3 | - | - |
| 37A | 54 | 13.4 | 10.0 | 13.4 | 3.4 | 40.7 | - | - |
| 37B | 54 | 13.1 | 10.0 | | | 42.4 | - | - |
| 38A | 54 | 10.8 | 9.0 | 11.2 | 2.3 | 36.2 | - | - |
| 38B | 54 | 11.2 | 9.0 | | | 37.2 | - | - |

Table 3 Metric Equivalents (Continued)

| Example No. | Foam Temp $T_F$ (°C) | $P_M$ Mixer inlet Pressure (MPa) | $P_D$ Die inlet Pressure (MPa) | $P_{MC}$ Critical Pressure (MPa) | $\Delta P_C$ Critical Pressure Drop (MPa) | Foam Density (kg/m³) | Compressive Strength (kPa) MD | Compressive Strength (kPa) TD |
|---|---|---|---|---|---|---|---|---|
| 39A | 54 | 8.8 | 6.7 | 8.7 | 2.0 | 37.8 | - | - |
| 39B | 54 | 8.5 | 6.7 | | | 39.7 | - | - |
| 40A | 54 | 8.0 | 5.9 | 8.0 | 2.1 | 26.9 | - | - |
| 40B | 54 | 7.9 | 5.9 | | | 32.5 | - | - |
| 41A | 54 | 7.8 | 5.8 | 7.4 | 1.6 | 37.2 | - | - |
| 41B | 54 | 6.9 | 5.8 | | | 39.7 | - | 346 |
| 42A | 54 | 8.8 | 5.7 | 9.4 | 3.8 | 46.5 | 292 | 440 |
| 42B | 54 | 9.4 | 5.7 | | | 47.7 | 342 | 411 |
| 43A | 54 | 13.3 | 8.3 | 10.7 | 4.1 | 45.3 | 272 | 475 |
| 43B | 54 | 10.5 | 6.6 | | | 46.6 | 308 | 477 |
| 43C | 54 | 10.7 | 6.6 | | | 45.7 | 271 | 527 |

Table 4 illustrates examples of good and poor quality polystyrene foams prepared above and below the critical pressure. The blowing agent is a more environmentally acceptable blowing agent having high permeability components and no long-term insulating component as defined in the discussion preceding Table 1.

TABLE 4 NON-LONG-TERM INSULATING BLOWING AGENTS FOR POLYSTYRENE FOAMS

| Example No | Polymer Type | Blowing Agent Systems (Components in pph) | Total BA Level (pph) | Foam Temp $T_F$ (°F) | Mixer RPM | $P_M$ Mixer Inlet Pressure (psi) | $T_{Mixer}$ (°C) | $P_D$ Die Inlet Pressure (psi) | $P_{MC}$ Critical Pressure (psi) | $\Delta P_C$ Critical Pressure Drop (psi) | Foam Density (pcf) | Foam Cell Size (mm) | Compressive Strength (psi) MD | Compressive Strength (psi) TD | Quality of Foam Surface |
|---|---|---|---|---|---|---|---|---|---|---|---|---|---|---|---|
| 44A<br>44B | PS<br>" | CFC-22/$CO_2$/$C_2H_6$<br>7.6/1.1/1.4 | 10.1<br>" | 130<br>" | 10<br>" | 1400<br>1360 | 155<br>162 | 1030<br>" | 1380 | 350 | 1.90<br>1.89 | 0.13<br>0.13 | ----<br>---- | ----<br>---- | Good<br>Poor |
| 45A<br>45B | PS<br>" | CFC-22/$CO_2$/$C_3H_8$<br>6.0/1.3/1.9 | 9.2<br>" | 130<br>" | 10<br>" | 1250<br>1220 | 153<br>156 | 890<br>" | 1230 | 340 | 1.86<br>1.89 | 0.28<br>0.30 | ----<br>24.2 | ----<br>47.3 | Good<br>Poor |
| 46A<br>46B | PS<br>" | EtCl/$CO_2$/$C_2H_6$<br>3.5/1.3/1.7 | 6.5<br>" | 130<br>" | 10<br>" | 930<br>950 | 174<br>165 | 660<br>660 | 940 | 280 | 2.05<br>2.08 | 2.71<br>3.24 | 10.5<br>9.7 | 49.2<br>52.8 | Poor<br>Good |
| 47A<br>47B | PS<br>" | EtCl/$CO_2$/$C_3H_8$<br>3.5/0.9/2.5 | 6.9<br>" | 130<br>" | 10<br>" | 1060<br>1000 | 155<br>167 | 700<br>700 | 1030 | 330 | 2.41<br>2.18 | 2.79<br>2.0 | 13.2<br>15.7 | 72.8<br>62.3 | Good<br>Poor |
| 48A<br>48B | PS<br>" | EtCl/$CO_2$/CFC-22<br>3.5/1.3/5.0 | 9.8<br>" | 130<br>" | 10<br>" | 1040<br>1110 | 180<br>162 | 770<br>770 | 1070 | 300 | 1.95<br>1.98 | 3.35<br>2.80 | ----<br>---- | ----<br>---- | Poor<br>Good |
| 49A<br>49B | PS<br>" | EtCl/CFC-22/$C_2H_6$<br>3.5/5.0/0.9 | 9.4<br>" | 130<br>" | 10<br>" | 990<br>1030 | 177<br>169 | 680<br>680 | 1010 | 330 | 2.29<br>2.23 | 1.58<br>2.86 | ----<br>---- | ----<br>---- | Poor<br>Good |
| 50A<br>50B | PS<br>" | EtCl/CFC-22/$C_3H_8$<br>3.5/5.0/1.3 | 9.8<br>" | 130<br>" | 10<br>" | 920<br>890 | 153<br>164 | 590<br>590 | 900 | 310 | 2.23<br>2.19 | 2.72<br>3.61 | 7.3<br>6.3 | 59.9<br>58.4 | Good<br>Poor |

TABLE 4 NON-LONG-TERM INSULATING BLOWING AGENTS FOR POLYSTYRENE FOAMS (CONTINUED)

| Example No | Polymer Type | Blowing Agent Systems (Components in pph) | Total BA Level (pph) | Foam Temp. $T_F$ (°F) | Mixer RPM | $P_M$ Mixer Inlet Pressure (psi) | $T_{Mixer}$ (°C) | $P_D$ Die Inlet Pressure (psi) | $P_{MC}$ Critical Pressure (psi) | $\Delta P_C$ Critical Pressure Drop (psi) | Foam Density (pcf) | Foam Cell Size (mm) | Compressive Strength (psi) | | Quality of Foam Surface |
|---|---|---|---|---|---|---|---|---|---|---|---|---|---|---|---|
| | | | | | | | | | | | | | MD | TD | |
| 51A | PS | $H_2O/CO_2/CFC\text{-}22$ 1.0/1.3/4.9 | 7.2 | 130 | 10 | 1590 | 155 | 1050 | 1540 | 490 | 2.08 | 1.16 | ---- | 23.0 | Good |
| 51B | " | | " | " | " | 1500 | 158 | 1050 | | | 1.80 | 0.54 | ---- | ---- | Poor |
| 52A | PS | $H_2O/CO_2/C_3H_8$ 1.0/1/3.2.5 | 4.8 | 130 | 10 | 1540 | 155 | 1080 | 1500 | 420 | 1.97 | 0.22 | ---- | ---- | Good |
| 52B | " | | " | " | " | 1470 | 165 | 1080 | | | 1.99 | 0.22 | ---- | 39.1 | Poor |
| 53A | PS | $H_2O/CO_2/EtCl$ 0.98/1.3/3.7 | 6.0 | 130 | 10 | 1980 | 181 | 1510 | 2010 | 500 | 2.74 | 3.71 | 13.3 | 55.5 | Poor |
| 53B | " | | " | " | " | 2040 | 162 | 1510 | | | 2.54 | 1.98 | 12.9 | 50.1 | Good |

Table 4 Metric Equivalents

| Example No. | Foam Temp $T_F$ (°C) | $P_M$ Mixer inlet Pressure (MPa) | $P_D$ Die inlet Pressure (MPa) | $P_{MC}$ Critical Pressure (MPa) | $\Delta P_C$ Critical Pressure Drop (MPa) | Foam Density (kg/m$^3$) | Compressive Strength (kPa) | |
|---|---|---|---|---|---|---|---|---|
| | | | | | | | MD | TD |
| 44A | 54 | 9.7 | 7.1 | 9.5 | 2.4 | 30.4 | - | - |
| 44B | 54 | 9.4 | 7.1 | | | 30.3 | - | - |
| 45A | 54 | 8.6 | 6.1 | 8.5 | 2.3 | 29.8 | - | - |
| 45B | 54 | 8.4 | 6.1 | | | 30.3 | 167 | 326 |
| 46A | 54 | 6.4 | 4.6 | 6.5 | 1.9 | 32.8 | 72 | 339 |
| 46B | 54 | 6.6 | 4.6 | | | 33.3 | 67 | 364 |
| 47A | 54 | 7.3 | 4.8 | 7.1 | 2.3 | 38.6 | 91 | 502 |
| 47B | 54 | 6.9 | 4.8 | | | 34.9 | 108 | 430 |
| 48A | 54 | 7.2 | 5.3 | 7.4 | 2.1 | 31.2 | - | - |
| 48B | 54 | 7.7 | 5.3 | | | 31.7 | - | - |
| 49A | 54 | 6.8 | 4.7 | 7.0 | 2.3 | 36.7 | - | - |
| 49B | 54 | 7.1 | 4.7 | | | 35.7 | - | - |
| 50A | 54 | 6.3 | 4.1 | 6.2 | 2.1 | 35.7 | 50 | 413 |
| 50B | 54 | 6.1 | 4.1 | | | 35.1 | 43 | 403 |

Table 4 Metric Equivalents
(Continued)

| Example No. | Foam Temp $T_F$ (°C) | $P_M$ Mixer inlet Pressure (MPa) | $P_D$ Die inlet Pressure (MPa) | $P_{MC}$ Critical Pressure (MPa) | $\Delta P_C$ Critical Pressure Drop (MPa) | Foam Density (kg/$m^3$) | Compressive Strength (kPa) | |
|---|---|---|---|---|---|---|---|---|
| | | | | | | | MD | TD |
| 51A | 54 | 11.0 | 7.2 | 10.6 | 3.4 | 33.3 | - | 159 |
| 51B | 54 | 10.3 | 7.2 | | | 28.8 | - | - |
| 52A | 54 | 10.6 | 7.4 | 10.3 | 2.9 | 31.6 | - | - |
| 52B | 54 | 10.1 | 7.4 | | | 31.9 | - | 270 |
| 53A | 54 | 13.7 | 10.4 | 13.9 | 3.4 | 43.9 | 92 | 383 |
| 53B | 54 | 14.1 | 10.4 | | | 40.7 | 89 | 345 |

Table 5 illustrates SAA and novel CISAA foams prepared with the process of the present invention. The blowing agents are non-long-term blowing agents.

TABLE 5 NON-LONG-TERM INSULATING BLOWING AGENTS FOR SAA AND CISAA COPOLYMER FOAMS

| Example No | Polymer Type | Blowing Agent Systems (Components in pph) | Total BA Level (pph) | Foam Temp. $T_F$ (°F) | Mixer RPM | $P_M$ Mixer Inlet Pressure (psi) | $T_{Mixer}$ (°C) | $P_D$ Die Inlet Pressure (psi) | $P_{MC}$ Critical Pressure (psi) | $\Delta P_C$ Critical Pressure Drop (psi) | Foam Density (pcf) | Foam Cell Size (mm) | Compressive Strength (psi) | | Quality of Foam Surface |
|---|---|---|---|---|---|---|---|---|---|---|---|---|---|---|---|
| | | | | | | | | | | | | | MD | TD | |
| 54A | SAA(3%AA) | $EtCl/CO_2/C_4H_{10}$ 3.5/1.3/1.7 | 6.5 | 130 | 10 | 1360 | 164 | 940 | 1340 | 400 | 2.72 | 0.54 | ---- | 40.1 | Good |
| 54B | " | | " | " | " | 1310 | 170 | 940 | | | 2.63 | 0.32 | ---- | ---- | Poor |
| 55A | SAA (3%AA) | $H_2O/CO_2/C_4H_8$ 1.0/1.3/2.5 | 4.8 | 130 | 10 | 1560 | 165 | 1150 | 1520 | 370 | 2.47 | 0.38 | ---- | ---- | Good |
| 55B | " | | " | " | " | 1480 | 168 | 1150 | | | 2.43 | 0.28 | ---- | ---- | Poor |
| 56A | SAA (3%AA) | $H_2O/CO_2/EtCl$ 0.97/1.3/3.7 | 6.0 | 130 | 10 | 1560 | 180 | 1060 | 1570 | 510 | 2.53 | 3.25 | 12.5 | 30.6 | Poor |
| 56B | " | | " | " | " | 1590 | 171 | 1060 | | | 2.70 | 2.17 | 20.0 | 35.7 | Good |
| 57A | SAA (3%AA) | $H_2O/CO_2/CFC-22$ 1.0/1.63/6.12 | 8.75 | 130 | 10 | 1710 | 180 | 1360 | 1790 | 430 | 2.21 | 0.93 | ---- | 39.1 | Poor |
| 57B | " | | " | " | " | 1880 | 166 | 1360 | | | 2.18 | 0.46 | ---- | 31.7 | Good |
| 58A | SAA (3%AA) 0.5 pph $Ca(OH)_2$ | $EtCl/CO_2/C_4H_{10}$ 3.5/1.3/1.7 | 6.5 | 130 | 10 | 1570 | 166 | 850 | 1480 | 630 | 3.16 | 0.24 | 73.1 | 49.5 | Good |
| 58B | | | " | " | " | 1400 | 179 | 850 | | | 2.91 | 0.19 | ---- | 36.9 | Poor |

TABLE 5 NON LONG-TERM INSULATING BLOWING AGENTS FOR SAA AND CI SAA COPOLYMER FOAMS (CONTINUED)

| Example No | Polymer Type | Blowing Agent Systems (Components in pph) | Total BA Level (pph) | Foam Temp $T_f$ (°F) | Mixer RPM | $P_M$ Mixer Inlet Pressure (psi) | $T_{Mixer}$ (°C) | $P_D$ Die Inlet Pressure (psi) | $P_{MC}$ Critical Pressure (psi) | $\Delta P_C$ Critical Pressure Drop (psi) | Foam Density (pcf) | Foam Cell Size (mm) | Compressive Strength (psi) | | Quality of Foam Surface |
|---|---|---|---|---|---|---|---|---|---|---|---|---|---|---|---|
| | | | | | | | | | | | | | MD | TD | |
| 59A | SAA(3% AA) 0.5 pph $Ca(OH)_2$ | $H_2O/CO_2/C_3H_8$ 1.0/1.3/2.5 | 4.8 | 130 | 10 | 1390 | 161 | 1020 | 1370 | 350 | 2.55 | 0.22 | ---- | ---- | Good |
| 59B | | | " | " | " | 1350 | 169 | 1020 | | | 2.66 | 0.23 | ---- | ---- | Poor |
| 60A | SAA (3% AA) 0.5 pph $Ca(OH)_2$ | $H_2O/CO_2/EtCl$ 0.97/1.3/3.2 | 6.0 | 130 | 10 | 1590 | 180 | 1100 | | | 2.75 | 0.30 | 49.4 | 68.8 | Excellent |
| 60B | | " | " | " | " | 1110 | 180 | 1120 | | | 2.51 | 0.28 | 33.0 | 41.8 | Poor |
| 60C | | " | " | " | " | 1220 | 167 | 720 | 1220 | 500 | 2.64 | 0.34 | 50.0 | 44.6 | Good |

Table 5 Metric Equivalents

| Example No. | Foam Temp $T_F$ (°C) | $P_M$ Mixer inlet Pressure (MPa) | $P_D$ Die inlet Pressure (MPa) | $P_{MC}$ Critical Pressure (MPa) | $\Delta P_C$ Critical Pressure Drop (MPa) | Foam Density (kg/m$^3$) | Compressive Strength (kPa) MD | Compressive Strength (kPa) TD |
|---|---|---|---|---|---|---|---|---|
| 54A | 54 | 9.4 | 6.5 | 9.2 | 2.8 | 43.6 | - | 276 |
| 54B | 54 | 9.0 | 6.5 | | | 42.1 | - | - |
| 55A | 54 | 10.8 | 7.9 | 10.5 | 2.6 | 39.6 | - | - |
| 55B | 54 | 10.2 | 7.9 | | | 38.9 | - | - |
| 56A | 54 | 10.8 | 7.3 | 10.8 | 3.5 | 40.5 | 86 | 211 |
| 56B | 54 | 11.0 | 7.3 | | | 43.2 | 138 | 246 |
| 57A | 54 | 11.8 | 9.4 | 12.3 | 3.0 | 35.4 | - | 270 |
| 57B | 54 | 13.0 | 9.4 | | | 34.9 | - | 219 |
| 58A | 54 | 10.8 | 5.9 | 10.2 | 4.3 | 50.6 | 504 | 341 |
| 58B | 54 | 9.7 | 5.9 | | | 46.6 | - | 254 |
| 59A | 54 | 9.6 | 7.0 | 9.4 | 2.4 | 40.8 | - | - |
| 59B | 54 | 9.3 | 7.0 | | | 42.6 | - | - |
| 60A | 54 | 11.0 | 7.6 | | | 44.1 | 340 | 474 |
| 60B | 54 | 7.7 | 7.7 | | | 40.2 | 228 | 288 |
| 60C | 54 | 8.4 | 5.0 | 8.4 | 3.4 | 42.3 | 345 | 308 |

## Claims

1. A method for producing an alkenyl aromatic synthetic resin extruded foam body having closed cells including the steps of :

(a) heat plastifying the alkenyl aromatic synthetic resin ;
(b) introducing the plastified resin and a blowing agent into a mixing device having an inlet maintained at a pressure ($^PM$) which is greater than an equilibrium vapor pressure of the blowing agent in the alkenyl aromatic synthetic resin and blowing agent mixture ;
(c) passing the mixture through a cooling device ;
(d) passing the cooled mixture through a die having a die inlet pressure ($^PD$) which is greater than the die outlet pressure ;

characterised in that the quality of the foam's surface is controlled by continuously monitoring the pressure drop from the mixer's inlet to the die's inlet ($\Delta P = {}^PM - {}^PD$) and maintaining said pressure drop greater than or equal to an empirically predetermined minimum pressure drop ($\Delta P_C$) for the given mixture of resin blowing agent.

2. A method as claimed in Claim 1, wherein the blowing agent composition in step (b) is selected from one of the following compositions, wherein all percents are weight percents based on the total weight of the blowing agents :

(1) CFC-12, CFC-124, CFC-134A, CFC-142B, CFC-143A and mixtures thereof ;
(2) Any of the CFCs of (1) in a mixture with up to 6 percent $CO_2$ ;
(3) 55 to 97 percent EtCl and 3 to 45 percent $CO_2$ ;
(4) The blowing agent of (3) in a mixture with up to 90 percent of a CFC selected from CFC-12, CFC-142B and mixtures thereof ;
(5) 19 to 97 percent EtCl and 3 to 81 percent $CO_2$ ;
(6) The blowing agent of (5) in a mixture with up to 90 percent of a CFC selected from CFC-12, CFC-142B or mixtures thereof ;
(7) The blowing agent of (3) in a mixture with up to 90 percent of a mixture of CFC-12 and one or more CFCs selected from CFC-134A, CFC-124 and CFC-143A ;
(8) The blowing agent of (5) in a mixture with up to 90 percent of a mixture of CFC-12 and one or more CFCs selected from CFC-134A, CFC-124 and CFC-143A ;
(9) 20 to 97 percent EtCl and 3 to 80 percent of CFC-12, CFC-142B, CFC-134A, CFC-124, CFC-143A and mixtures thereof ;
(10) The blowing agent of (9) in a mixture with up to 3 percent $CO_2$ ;
(11) The blowing agent of (1) in a mixture with up to 40 percent of CFC-22 ;
(12) The blowing agent of (11) in a mixture with up to 5.5 percent $CO_2$ ;
(13) The blowing agent of (1) in a mixture with up to 50 percent ethane ;
(14) The blowing agent of (13) in a mixture with up to 6 percent $CO_2$ ;
(15) The blowing agent of (1) in a mixture with up to 50 percent propane ;
(16) The blowing agent of (15) in a mixture with up to 6 percent $CO_2$ ;
(17) The blowing agent of (5) in a mixture with up to 90 percent of the blowing agent of (1), and up to 50 percent ethane ;
(18) The blowing agent of (5) in a mixture with up to 90 percent of the blowing agent of (1), and up to 50 percent propane ;
(19) The blowing agent of (5) in a mixture with up to 90 percent of the blowing agent of (1), and up to 50 percent of CFC-22 ;
(20) CFC-22 ;
(21) The blowing agent of (20) in a mixture with up to 5 percent $CO_2$ ;
(22) The blowing agent of (20) in a mixture with up to 50 percent ethane ;
(23) The blowing agent of (21) in a mixture with up to 50 percent ethane ;
(24) The blowing agent of (20) in a mixture with up to 50 percent propane ;
(25) The blowing agent of (21) in a mixture with up to 50 percent propane ;
(26) EtCl and up to 40 percent $CO_2$ ;
(27) EtCl and up to 70 percent ethane ;

(28) The blowing agent of (26) in a mixture with up to 70 percent ethane ;
(29) EtCl and up to 70 percent propane ;
(30) The blowing agent of (26) in a mixture with up to 70 percent propane ;
(31) EtCl and up to 70 percent CFC-22 ;
(32) The blowing agent of (26) in a mixture with up to 70 percent CFC-22 ;
(33) The blowing agent of (31) in a mixture with up to 70 percent ethane ;
(34) The blowing agent of (31) in a mixture with up to 70 percent propane ;
(35) $H_2O$ ;
(36) 0.4 percent to 99.9 percent $H_2O$ and 0.1 percent to 99.6 percent $CO_2$ ;
(37) The blowing agent of (36) in a mixture with up to 99.5 percent of the blowing agent of (1) ;
(38) $H_2O$ and up to 60 percent CFC-22 ;
(39) The blowing agent of (36) in a mixture with up to 60 percent CFC-22 ;
(40) The blowing agent of (38) in a mixture with up to 60 percent of ethane, propane, EtCl or mixtures thereof;
(41) $H_2O$ and up to 60 percent ethane ;
(42) The blowing agent of (36) in a mixture with up to 60 percent ethane ;
(43) $H_2O$ and up to 60 percent propane ;
(44) The blowing agent of (36) in a mixture with up to 60 percent propane ;
(45) $H_2O$ and up to 60 percent EtCl ; and
(46) The blowing agent of (36) in a mixture with up to 60 percent EtCl.

3. A method as claimed in Claim 1 or Claim 2, wherein the product has an average cell size of from 0.05 to 3.5 mm, a density of from 16 to 80 kg/m$^3$ (1.0 to 5.0 pcf), a minimal cross-sectional thickness of 1.3 cm (0.5 in) and a minimal cross-sectional area of 52 cm$^2$ (8 in$^2$).

4. A method as claimed in any one of the preceding claims wherein the alkenyl aromatic synthetic resin is polystyrene.

5. A method as claimed in any one of Claims 1, 2 and 3, wherein the alkenyl aromatic synthetic resin is a styrene/acrylic acid copolymer having one tenth (0.1) weight percent to fifteen (15) weight percent polymerized acrylic acid by total resin weight.

6. A method as claimed in any one of Claims 1, 2, 3 and 5, wherein the alkenyl aromatic synthetic resin is an ionomeric styrene/acrylic acid copolymer.

7. A method as claimed in Claim 6, wherein the ion is selected from calcium, sodium, lithium, potassium, magnesium and mixtures of these ions.

8. A method as claimed in Claim 7, wherein the ions for the ionomeric styrene/acrylic acid copolymer are provided by addition to the heat plastified resin in step (a) of one tenth (0.1) to one (1) parts per hundred by weight of resin of a neutralizing agent selected from calcium hydroxide, lithium hydroxide, sodium hydroxide, potassium hydroxide, magnesium oxide and mixtures of these compounds.

9. A method as claimed in Claim 8, wherein said amount of neutralizing agent added is one tenth (0.1) to six tenths (0.6) per hundred parts by weight of resin.

10. A method as claimed in any one of the preceding claims further comprising the step of passing the plastified resin through a pressure control device, after step (a) and before step (b).

11. A method as claimed in any one of the preceding claims, wherein a drop in the value of $\Delta P$ is corrected by

(a) reducing the temperature of the mixing device ;
(b) partially closing a throttle valve located between the mixing device and the die's inlet ;
(c) reducing the blowing agent concentration ; and/or
(d) increasing the feed rate of the alkenyl aromatic synthetic resin into the mixing device.

12. A method as claimed in any one of the preceding claims wherein the value of $\Delta P$ is continuously measured and an alarm signal is automatically activated whenever the value of $\Delta P$ falls below a preset value.

**Patentansprüche**

1. Verfahren zum Herstellen eines extrudierten alkenylaromatischen synthetischen Harzschaumkörpers mit geschlossenen Zellen durch die Schritte :

(a) Plastifizieren des synthetischen alkenylaromatischen synthetischen Harzes durch Wärme,

(b) Einbringen des plastifizierten Harzes und eines Treibmittels in eine Mischvorrichtung, deren Eingang unter einem Druck ($P_M$) gehalten wird, der großer ist als der Gleichgewichtsdampfdruck des Treibmittels in der Mischung von synthetischem alkenylaromatischen Harz und Treibmittel,

(c) Hindurchführen der Mischung durch eine Kühlvorrichtung,

(d) Hindurchführen der gekühlten Mischung durch eine Düse mit einem Eingangsdruck ($P_D$), der größer ist als der Düsenausgangsdruck, **dadurch gekennzeichnet**, daß die Qualität der Schaumoberfläche durch kontinuierliches Überwachen des Druckabfalles zwischen dem Eingang des Mischers und dem Düseneingang ($\Delta P = P_M - P_D$) gesteuert wird, und Aufrechterhalten des Druckabfalles größer oder gleich einem empirisch vorbestimmten minimalen Druckabfall ($\Delta P_C$) für eine gegebene Mischung aus Harz und Treibmittel.

2. Verfahren nach Anspruch 1, **dadurch gekennzeichnet**, daß die Treibmittelzusammensetzung in Schritt (b) ausgewählt ist aus einer der nachfolgenden Zusammensetzungen, wobei alle Prozente Gewichtsprozente sind, bezogen auf Gesamtgewicht der Treibmittel :

(1) CFC-12, CFC-124, CFC-134A, CFC-142B, CFC-143A und Mischungen derselben,
(2) alle CFCs von (1) in Mischung mit bis zu 6% $CO_2$,
(3) 55-97% EtCl und 3-45% $CO_2$,
(4) das Treibmittel von (3) in Mischung mit bis zu 90% eines CFC, ausgewählt aus CFC-12, CFC-142B und Mischungen derselben,
(5) 19-97% EtCl und 3-81% $CO_2$,
(6) das Treibmittel von (5) in Mischung mit bis zu 90% eines CFC, ausgewählt aus CFC-12, CFC-142B oder Mischungen derselben,
(7) das Treibmittel von (3) in Mischung mit bis zu 90% einer Mischung von CFC-12 und ein oder mehreren CFC's, ausgewählt aus CFC-134A, CFC-124 und CFC-143A,
(8) das Treibmittel von (5) in Mischung mit bis zu 90% einer Mischung von CFC-12 und ein oder mehreren CFC's, ausgewählt aus CFC-134A, CFC-124 und CFC-143A,
(9) 20-97% EtCl und 3-80% von CFC-12, CFC-142B, CFC-134A, CFC-124, CFC-143A und Mischungen derselben,
(10) das Treibmittel von (9) in Mischung mit bis zu 3% $CO_2$,
(11) das Treibmittel von (1) in Mischung mit bis zu 40% CFC-22,
(12) das Treibmittel von (11) in Mischung mit bis zu 5,5% $CO_2$,
(13) das Treibmittel von (1) in Mischung mit bis zu 50% Ethan,
(14) das Treibmittel von (13) in Mischung mit bis zu 6% $CO_2$,
(15) das Treibmittel von (1) in Mischung mit bis zu 50% Propan,
(16) das Treibmittel von (15) in Mischung mit bis zu 6% $CO_2$,
(17) das Treibmittel von (5) in Mischung mit bis zu 90% des Treibmittels von (1) und bis zu 50% Ethan,
(18) das Treibmittel von (5) in Mischung mit bis zu 90% des Treibmittels von (1) und bis zu 50% Propan,
(19) das Treibmittel von (5) in Mischung mit bis zu 90% des Treibmittels von (1) und bis zu 50% CFC-22,
(20) CFC-22,
(21) das Treibmittel von (20) in Mischung mit bis zu 5% $CO_2$,
(22) das Treibmittel von (20) in Mischung mit bis zu 50% Ethan,
(23) das Treibmittel von (21) in Mischung mit bis zu 50% Ethan,
(24) das Treibmittel von (20) in Mischung mit bis zu 50% Propan,
(25) das Treibmittel von (21) in Mischung mit bis zu 50% Propan,
(26) EtCl und bis zu 40% $CO_2$,
(27) EtCL und bis zu 70% Ethan,
(28) das Treibmittel von (26) in Mischung mit bis zu 70% Ethan,
(29) EtCl und bis zu 70% Propan,
(30) das Treibmittel von (26) in Mischung mit bis zu 70% Propan,
(31) EtCL und bis zu 70% CFC-22,
(32) das Treibmittel von (26) in Mischung mit bis zu 70% CFC-22,
(33) das Treibmittel von (31) in Mischung mit bis zu 70% Ethan,
(34) das Treibmittel von (31) in Mischung mit bis zu 70% Propan,
(35) $H_2O$,
(36) 0,4%-99,9% $H_2O$ und 0,1%-99,6% $CO_2$,
(37) das Treibmittel von (36) in Mischung mit bis zu 99,5% des Treibmittels von (1),
(38) $H_2O$ und bis zu 60% CFC-22,

(39) das Treibmittel von (36) in Mischung mit bis zu 60% CFC-22,
(40) das Treibmittel von (38) in Mischung mit bis zu 60% Ethan, Propan, EtCl oder Mischung derselben,
(41) $H_2$ O und bis zu 60% Ethan,
(42) das Treibmittel von (36) in Mischung mit bis zu 60% Ethan,
(43) $H_2O$ und bis zu 60% Propan,
(44) das Treibmittel von (36) in Mischung mit bis zu 60% Propan,
(45) $H_2O$ und bis zu 60% EtCl und
(46) das Treibmittel von (36) in Mischung mit bis zu 60% EtCl.

3. Verfahren nach Anspruch 1 oder Anspruch 2, **dadurch gekennzeichnet**, daß das Produkt eine mittlere Zellgröße von 0,05-3,5 mm, eine Dichte von 16-80 kg/m$^3$ (1,0-5,0 pcf), eine minimale Querschnittsdicke von 1,3 cm (0,5 inch) und eine minimale Querschnittsfläche von 52 cm$^2$ (8 inch$^2$) aufweist.

4. Verfahren nach jedem der vorstehenden Ansprüche, **dadurch gekennzeichnet**, daß das synthetische alkenylaromatische Harz Polystyrol ist.

5. Verfahren nach jedem der Ansprüche 1, 2 und 3, **dadurch gekennzeichnet**, daß das synthetische alkenylaromatische Harz ein Styrol/Acrylsäurecopolymer ist mit einem zehntel (0,1) Gewichtsprozent bis fünfzehn (15) Gewichtsprozent polymerisierter Acrylsäure, bezogen auf Gesamtharzgewicht.

6. Verfahren nach jedem der Ansprüche 1, 2, 3 und 5, **dadurch gekennzeichnet**, daß das synthetische alkenylaromatische Harz ein ionomeres Styrol/Acrylsäurecopolymer ist.

7. Verfahren nach Anspruch 6, **dadurch gekennzeichnet**, daß das Ion ausgewählt ist aus Calcium, Natrium, Lithium, Kalium, Magnesium und Mischungen dieser Ionen.

8. Verfahren nach Anspruch 7, **dadurch gekennzeichnet**, daß die Ionen des ionomeren Styrol/Acrylsäurecopolymer geschaffen werden durch Zugabe zum durch Wärme plastifizierten Harz in Schritt (a) von einem zehntel (0,1) bis ein (1) Gewichtsteile pro 100

Harz eines Neutralisierungsmittels, ausgewählt aus Calciumhydroxid, Lithiumhydroxid, Natriumhydroxid, Kaliumhydroxid, Magnesiumoxid und Mischungen dieser Verbindungen.

9. Verfahren nach Anspruch 8, **dadurch gekennzeichnet**, daß die zugesetzte Menge Neutralisierungsmittel von ein zehntel (0,1) bis sechs zehntel (0,6) Gewichtsteile pro 100 Harz beträgt.

10. Verfahren nach jedem der vorstehenden Ansprüche, **gekennzeichnet durch** den weiteren Schritt des Hindurchführens des plastifizierten Harzes durch eine Drucksteuereinrichtung nach Schritt (a) und vor Schritt (b).

11. Verfahren nach jedem der vorstehenden Ansprüche, **dadurch gekennzeichnet**, daß der Abfall im Wert von P korrigiert wird durch

(a) Verringern der Temperatur der Mischvorrichtung,
(b) teilweises Schließen eines Drosselventils, das zwischen der Mischvorrichtung und dem Düseneingang angeordnet ist,
(c) Verringern der Treibmittelkonzentration und/oder
(d) Erhöhen der Zuführgeschwindigkeit des synthetischen alkenylaromatischen Harzes in die Mischvorrichtung.

12. Verfahren nach jedem der vorstehenden Ansprüche, **dadurch gekennzeichnet**, daß der Wert von $\Delta P$ kontinuierlich bestimmt wird und automatisch ein Alarmsignal aktiviert wird, wenn der Wert von $\Delta P$ unter einen vorgewählten Wert fällt.

## Revendications

1. Procédé de production d'un corps en mousse extrudée en résine synthétique alkényl aromatique comportant des cellules fermées comprenant les étapes consistant à :

(a) plastifier thermiquement la résine synthétique alkényle aromatique ;
(b) introduire la résine plastifiée et un agent gonflant dans un dispositif mélangeur comportant une entrée maintenue à une pression ($P_M$) qui est supérieure à une pression de vapeur d'équilibre de l'agent gonflant dans le mélange d'agent gonflant et de résine synthétique alkényl aromatique ;
(c) faire passer le mélange à travers un dispositif réfrigérant ;
(d) faire passer le mélange refroidi à travers une filière où une pression d'entrée de filière ($P_F$) est supérieure à la pression de sortie de filière ;

caractérisé en ce que la qualité de la surface de mousse est réglée en surveillant de façon continue la perte de charge entre l'entrée dans le mélangeur et l'entrée dans la filière ($\Delta P = P_M - P_F$) et en maintenant ladite perte de charge supérieure

ou égale à une perte de charge minimale prédéterminée empiriquement ($\Delta Pc$) pour le mélange donné de résine et d'agent gonflant.

2. Procédé selon la revendication 1, dans lequel la composition de l'agent gonflant de l'étape (b) est choisie parmi l'une des compositions suivantes, où tous les pourcentages sont des pourcentages en poids sur la base du poids total des agents gonflants :

(1) CFC-12, CFC-124, CFC-134A, CFC-142B, CFC-143A et des mélanges de ceux-ci ;
(2) L'un quelconque des CFC de (1) en mélange avec une quantité pouvant atteindre 6 pour-cent de $CO_2$;
(3) 55 à 97 pour-cent de EtCl et 3 à 45 pour-cent de $CO_2$ ;
(4) l'agent gonflant selon (3) en mélange avec une quantité pouvant atteindre 90 pour-cent- d'un CFC choisi parmi CFC-12, CFC-142B et des mélanges de ceux-ci ;
(5) 19 à 97 pour-cent de EtCl et 3 à 81 pour-cent de $CO_2$ ;
(6) l'agent gonflant selon (5) en mélange avec une quantité pouvant atteindre 90 pour-cent d'un CFC choisi parmi CFC-12, CFC-142B ou des mélanges de ceux-ci ;
(7) l'agent gonflant selon (3) en mélange avec une quantité pouvant atteindre 90 pour-cent d'un mélange de CFC-12 et d'un ou plusieurs CFC choisis parmi CFC-134A, CFC-124 et CFC-143A ;
(8) l'agent gonflant selon (5) en mélange avec une quantité pouvant atteindre 90 pour-cent d'un mélange de CFC-12 et d'un ou plusieurs CFC choisis parmi CFC-134A, CFC-124 et CFC-143A ;
(9) 20 à 97 pour-cent de EtCl et 3 à 80 pour-cent de CFC-12, CFC-142B, CFC-134A, CFC-124, CFC-143A et des mélanges de ceux-ci ;
(10) l'agent gonflant selon (9) en mélange avec une quantité pouvant atteindre 3 pour-cent de $CO_2$ ;
(11) l'agent gonflant selon (1) en mélange avec une quantité pouvant atteindre 40 pour-cent de CFC-22 ;
(12) l'agent gonflant selon (11) en mélange avec une quantité pouvant atteindre 5,5 pour-cent de $CO_2$ ;
(13) l'agent gonflant selon (1) en mélange avec une quantité pouvant atteindre 50 pour-cent d'éthane ;
(14) l'agent gonflant selon (13) en mélange avec une quantité pouvant atteindre 6 pour-cent de $CO_2$ ;
(15) l'agent gonflant selon (1) en mélange avec une quantité pouvant atteindre 50 pour-cent de propane ;
(16) l'agent gonflant selon (15) en mélange avec une quantité pouvant atteindre 6 pour-cent de $CO_2$ ;
(17) l'agent gonflant selon (5) en mélange avec une quantité pouvant atteindre 90 pour-cent de l'agent gonflant de (1) et 50 pour-cent d'éthane ;
(18) l'agent gonflant selon (5) en mélange avec une quantité pouvant atteindre 90 pour-cent de l'agent gonflant de (1) et 50 pour-cent de propane ;
(19) l'agent gonflant selon (5) en mélange avec une quantité pouvant atteindre 90 pour-cent de l'agent gonflant de (1) et 50 pour-cent de CFC-22 ;
(20) CFC-22 ;
(21) l'agent gonflant selon (20) en mélange avec une quantité pouvant atteindre 5 pour-cent de $CO_2$ ;
(22) l'agent gonflant selon (20) en mélange avec une quantité pouvant atteindre 50 pour-cent d'éthane ;
(23) l'agent gonflant selon (21) en mélange avec une quantité pouvant atteindre 50 pour-cent d'éthane ;
(24) l'agent gonflant selon (20) en mélange avec une quantité pouvant atteindre 50 pour-cent de propane ;
(25) l'agent gonflant selon (21) en mélange avec une quantité pouvant atteindre 50 pour-cent de propane ;
(26) EtCl et une quantité pouvant atteindre 40 pour-cent de $CO_2$ ;
(27) EtCl et une quantité pouvant atteindre 70 pour-cent d'éthane ;
(28) l'agent gonflant selon (26) en mélange avec une quantité pouvant atteindre 70 pour-cent d'éthane ;
(29) EtCl et une quantité pouvant atteindre 70 pour-cent de propane ;
(30) l'agent gonflant selon (26) en mélange avec une quantité pouvant atteindre 70 pour-cent de propane ;
(31) EtCl et une quantité pouvant atteindre 70 pour-cent de CFC-22 ;
(32) l'agent gonflant selon (26) en mélange avec une quantité pouvant atteindre 70 pour-cent de CFC-22 ;
(33) l'agent gonflant selon (31) en mélange avec une quantité pouvant atteindre 70 pour-cent d'éthane ;
(34) l'agent gonflant selon (31) en mélange avec une quantité pouvant atteindre 70 pour-cent de propane ;
(35) $H_2O$ ;
(36) 0,4 pour-cent à 99,9 pour-cent de $H_2O$ et 0,1 pour-cent à 99,6 pour-cent de $CO_2$ ;
(37) l'agent gonflant selon (36) en mélange avec une quantité pouvant atteindre 99,5 pour-cent de l'agent gonflant selon (1) ;
(38) $H_2O$ et une quantité pouvant atteindre 60 pour-cent de CFC-22 ;
(39) l'agent gonflant selon (36) en mélange avec une quantité pouvant atteindre 60 pour-cent de CFC-22 ;
(40) l'agent gonflant selon (38) en mélange avec une quantité pouvant atteindre 60 pour-cent d'éthane, de

propane, d'EtCl ou de mélanges de ceux-ci ;

(41) $H_2O$ et une quantité pouvant atteindre 60 pour-cent d'éthane ;

(42) l'agent gonflant selon (36) en mélange avec une quantité pouvant atteindre 60 pour-cent d'éthane ;

(43) $H_2O$ et une quantité pouvant atteindre 60 pour-cent de propane ;

(44) l'agent gonflant selon (36) en mélange avec une quantité pouvant atteindre 60 pour-cent de propane ;

(45) $H_2O$ et une quantité pouvant atteindre 60 pour-cent d'EtCl ; et

(46) l'agent gonflant selon (36) en mélange avec une quantité pouvant atteindre 60 pour-cent d'EtCl.

3. Procédé selon la revendication 1 ou la revendication 2, dans lequel le produit est d'une dimension moyenne de cellule comprise entre 0,05 et 3,5 mm, d'une densité comprise entre 16 et 80 kg/m$^3$ (1,0 à 5,0 pcf),d'une épaisseur minimale en coupe transversale de 1,3 cm (0,5 pouce) et d'une section minimale en coupe transversale de 52 cm$^2$ (8 pouces$^2$).

4. Procédé selon l'une quelconque des revendications précédentes dans lequel la résine synthétique alkényl aromatique est du polystyrène.

5. Procédé selon l'une quelconque des revendications 1, 2 et 3, dans lequel la résine synthétique alhényl aromatique est un copolymère styrène/acide acrylique comportant, par rapport au poids total de résine, un dixième (0,1) pour-cent en poids à quinze (15) pour-cent en poids d'acide acrylique polymérisé.

6. Procédé selon l'une des revendications 1, 2, 3 et 5, dans lequel la résine synthétique alkényl aromatique est un copolymère ionomère styrène/acide acrylique.

7. Procédé selon la revendication 6, dans lequel l'ion est choisi parmi le calcium, le sodium, le lithium, le potassium, le magnésium et des mélanges de ces ions.

8. Procédé selon la revendication 7, dans lequel les ions destinés au copolymère ionomère styrène/acide acrylique sont introduits par addition à la résine plastifiée thermiquement à l'étape (a) d'un dixième (0,1) à une (1) partie pour-cent en poids, de résine, d'un agent neutralisant choisi parmi l'hydroxyde de calcium, l'hydroxyde de lithium, l'hydroxyde de sodium, l'hydroxyde de potassium, l'oxyde de magnésium et des mélanges de ces composés.

9. Procédé selon la revendication 8, dans lequel ladite quantité d'agent neutralisant ajoutée est d'un dixième (0,1) à six dixièmes (0,6) de partie pour cent en poids, de résine.

10. Procédé selon l'une des revendications précédentes comprenant en outre l'étape consistant à faire passer la résine plastifiée à travers un dispositif de réglage de pression, après l'étape (a) et avant l'étape (b).

11. Procédé selon l'une des revendications précédentes, dans lequel une diminution de la valeur de $\Delta P$ est corrigée

(a) en réduisant la température du dispositif mélangeur ;

(b) en fermant partiellement une valve d'étranglement située entre le dispositif mélangeur et l'entrée de la filière ;

(c) en réduisant la concentration d'agent gonflant ; et/ou

(d) en augmentant le débit d'amenée de la résine synthétique alkényl aromatique dans le dispositif mélangeur.

12. Procédé selon l'une des revendications précédentes dans lequel la valeur de $\Delta P$ est mesurée de façon continue et un signal d'alarme est automatiquement activé chaque fois que la valeur de $\Delta P$ tombe au-dessous d'une valeur préétablie.

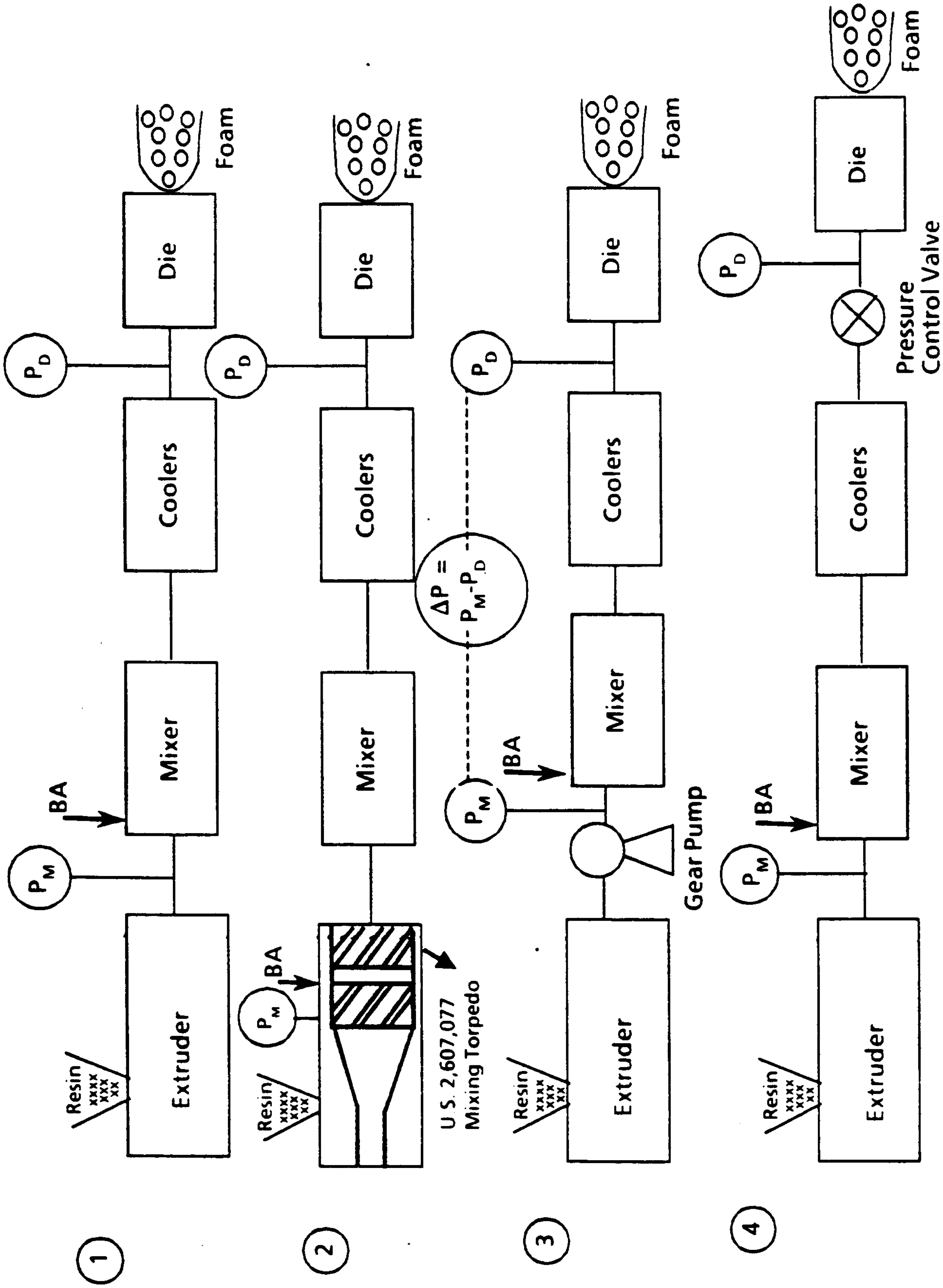
1
2
3
4
Resin
Extruder
$P_M$
BA
Mixer
Coolers
$P_D$
Die
Foam
U.S. 2,607,077
Mixing Torpedo
$\Delta P = P_M - P_D$
Gear Pump
Pressure
Control Valve

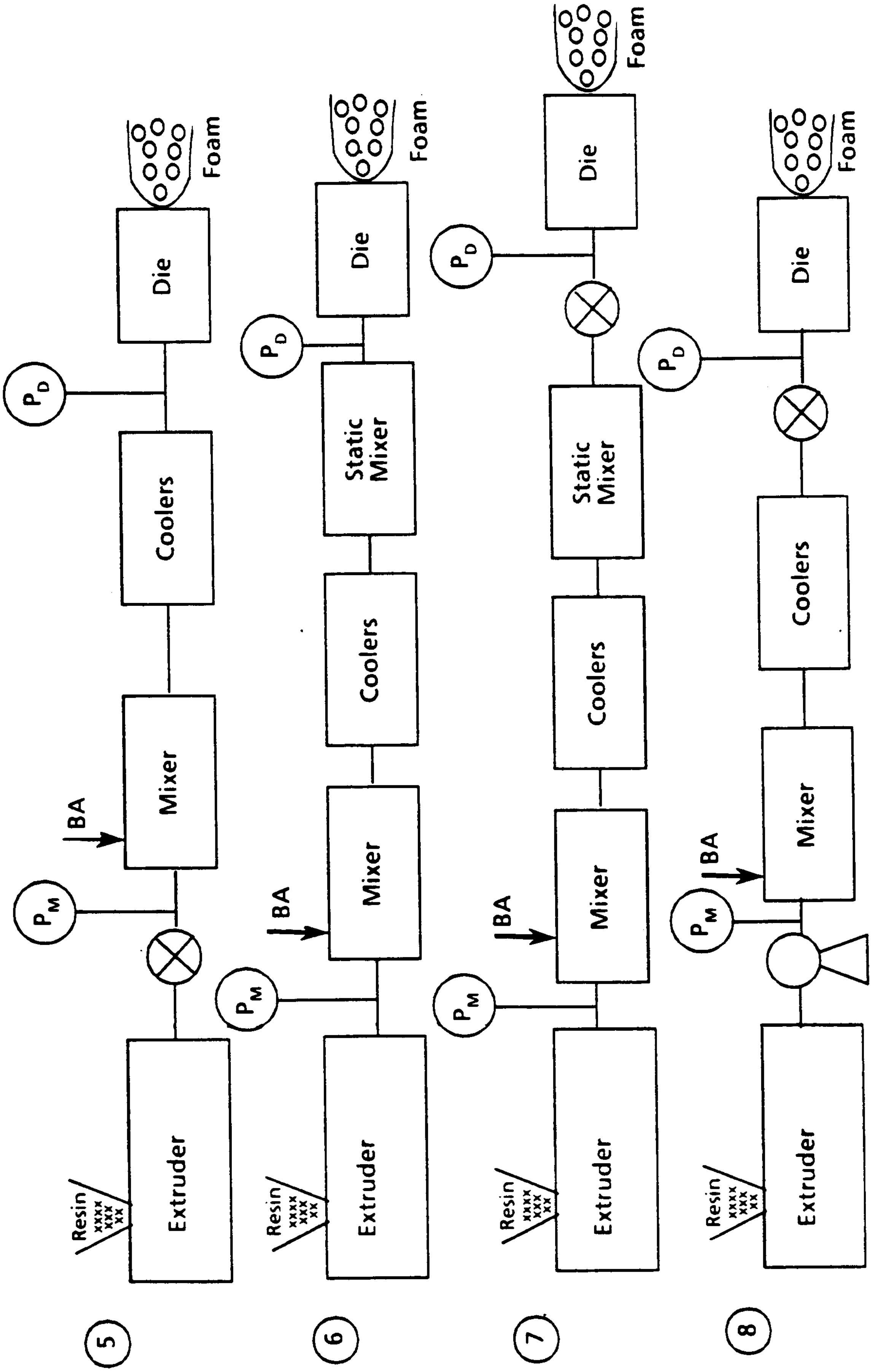
Resin
xxxx
xxx
xx
Extruder
$P_M$
BA
Mixer
Coolers
Static Mixer
$P_D$
Die
Foam
5
6
7
8

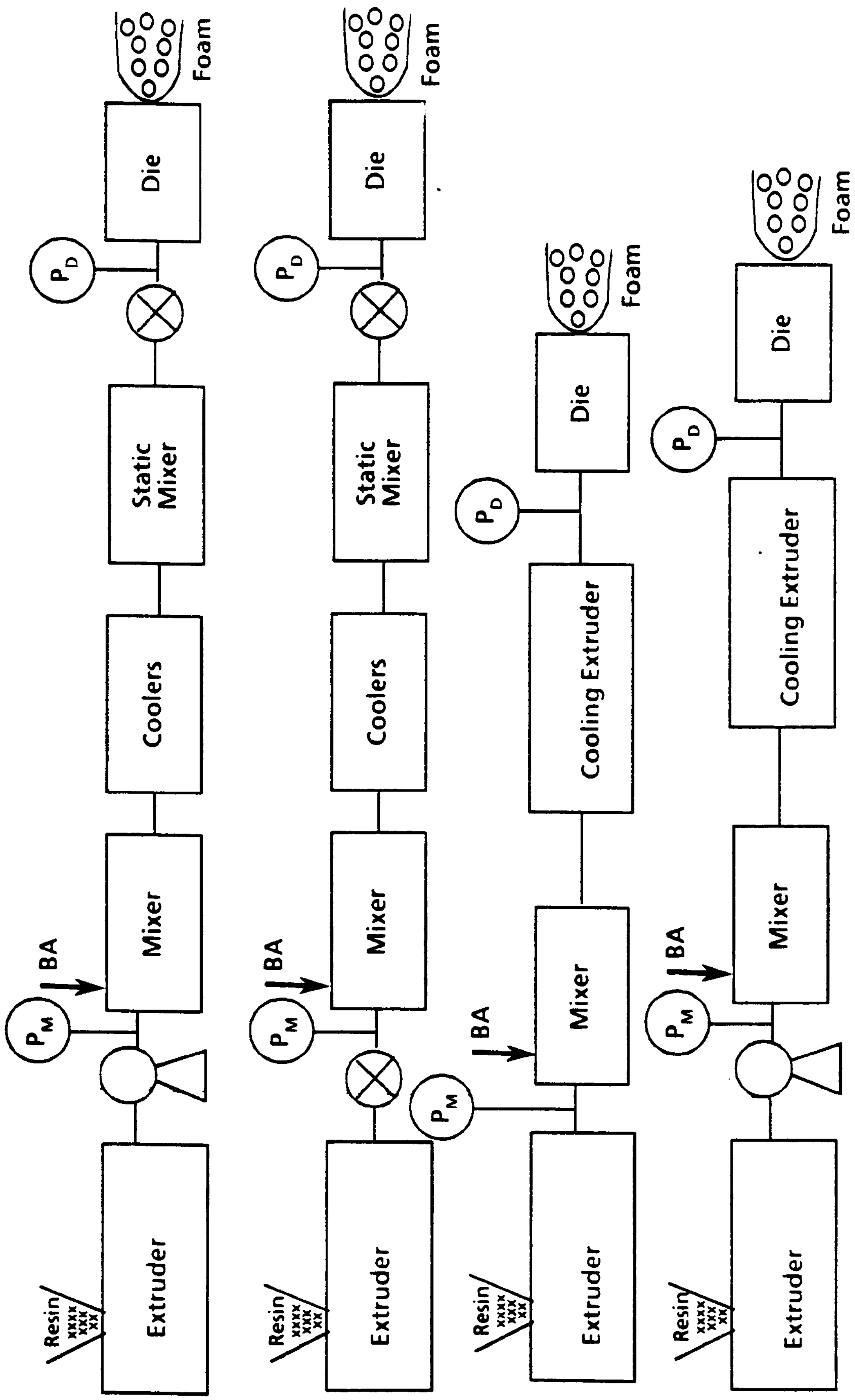
Resin
Extruder
P_M
BA
Mixer
Coolers
Static Mixer
P_D
Die
Foam
Resin
Extruder
P_M
BA
Mixer
Coolers
Static Mixer
P_D
Die
Foam
Resin
Extruder
P_M
BA
Mixer
Cooling Extruder
P_D
Die
Foam
Resin
Extruder
P_M
BA
Mixer
Cooling Extruder
P_D
Die
Foam

9

10

11

12

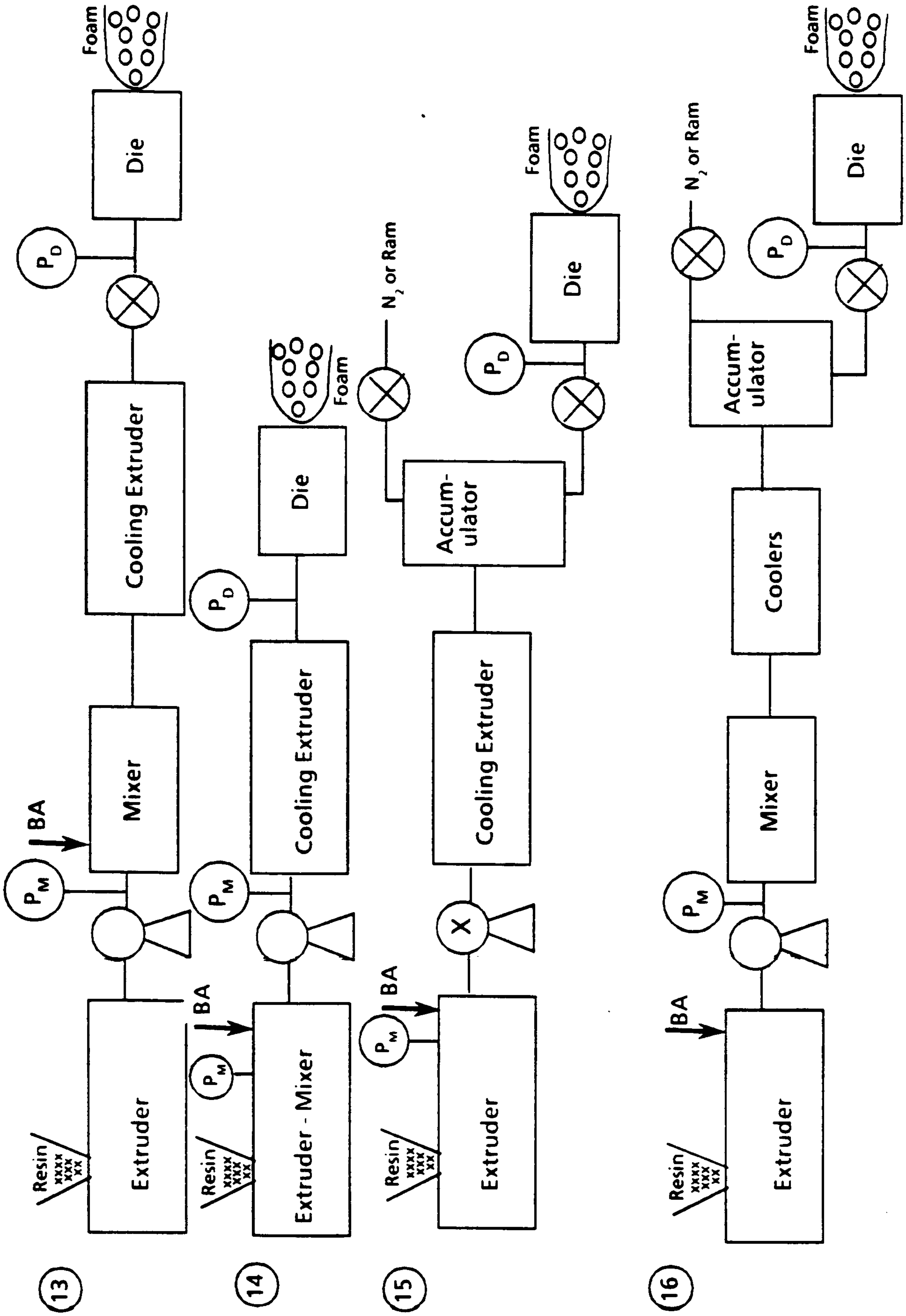
13
Resin
xxxx
xxx
xx
Extruder
$P_M$
BA
Mixer
Cooling Extruder
$P_D$
Die
Foam
14
Resin
xxxx
xxx
xx
Extruder - Mixer
$P_M$
BA
$P_M$
Cooling Extruder
$P_D$
Die
Foam
15
Resin
xxxx
xxx
xx
Extruder
$P_M$
BA
Cooling Extruder
Accum-
ulator
$N_2$ or Ram
$P_D$
Die
Foam
16
Resin
xxxx
xxx
xx
Extruder
BA
$P_M$
Mixer
Coolers
Accum-
ulator
$N_2$ or Ram
$P_D$
Die
Foam

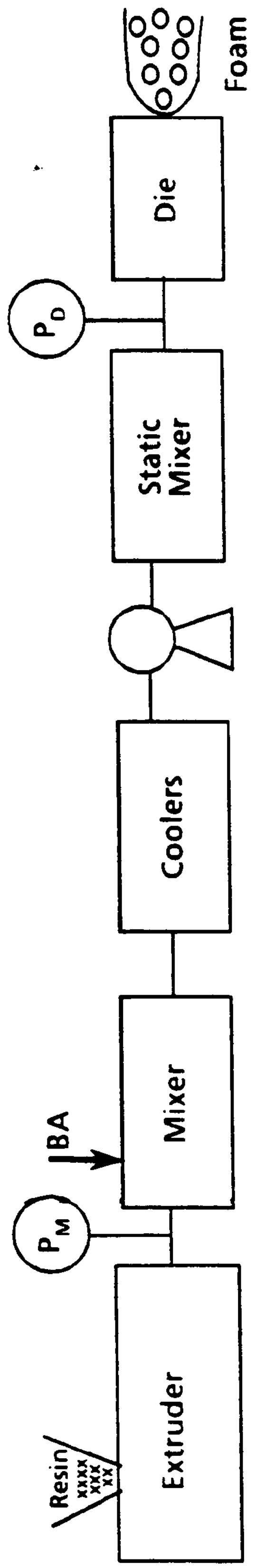
Resin
xxxx
xxx
xx
Extruder
PM
BA
Mixer
Coolers
Static Mixer
PD
Die
Foam

17

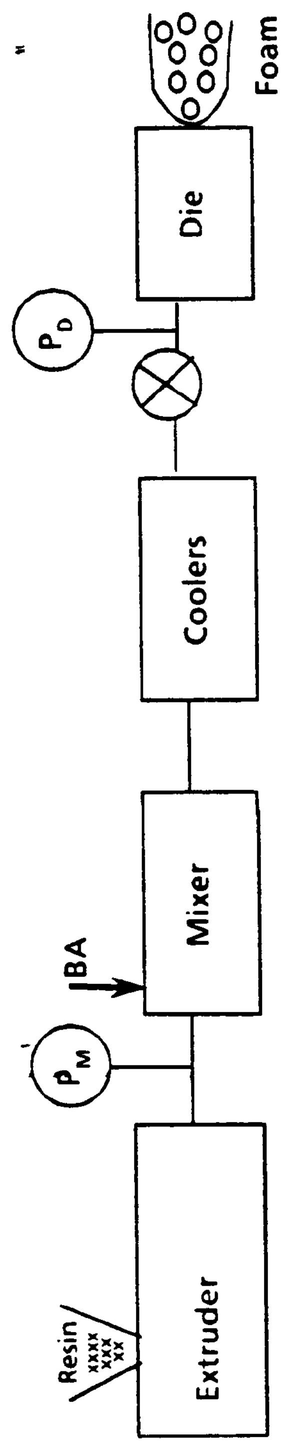
Resin
xxxx
xxx
xx
Extruder
PM
BA
Mixer
Coolers
PD
Die
Foam

18

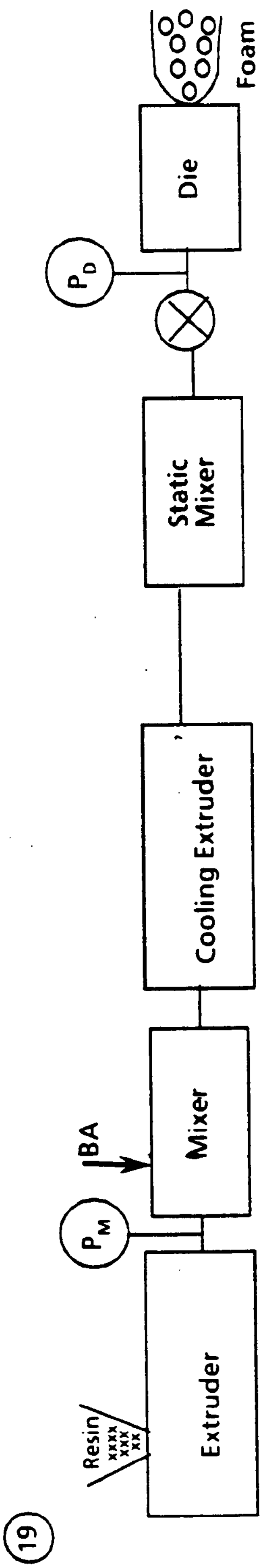
Resin
xxxx
xxx
xx
Extruder
PM
BA
Mixer
Cooling Extruder
Static Mixer
PD
Die
Foam

19